# EUROPÄISCHE PATENTANMELDUNG

(11) **EP 4 332 433 A1**
(43) Veröffentlichungstag der Anmeldung: **06.03.2024**
(21) Anmeldenummer: 23193856.4
(22) Anmeldetag: 29.08.2023
(51) Int. Cl.: F21W 131/20, H05B 45/10, H05B 47/11, H05B 45/20

(54) **BELEUCHTUNGSVORRICHTUNG UND BELEUCHTUNGSVERFAHREN MIT KONTRASTVERÄNDERUNG**

(30) Priorität: 05.09.2022 DE 102022122412
(71) Anmelder: Drägerwerk AG & Co. KGaA, 23558 Lübeck (DE)
(72) Erfinder: Kretschmann, Hanno, 23558 Lübeck (DE)

(57) **Zusammenfassung**

Die Erfindung betrifft eine Beleuchtungsvorrichtung (100) mit einer Haupt-Beleuchtungseinheit (1) und einer Zusatz-Beleuchtungseinheit (2). Jede Beleuchtungseinheit (1, 2) umfasst jeweils mehrere Lichtquellen-Gruppen, die sich einzeln ansteuern lassen. Die maximale Beleuchtungsstärke, welche die Haupt-Beleuchtungseinheit (1) auf einer beleuchteten Oberfläche (Ob) erzielt, ist um ein Mehrfaches größer als die maximale Beleuchtungsstärke, welche die Zusatz-Beleuchtungseinheit (2) erzielt. Das dₓ-Lichtfeld der Haupt-Beleuchtungseinheit (1) auf der Oberfläche (Ob) weist eine deutlich kleinere Fläche auf als das dₓ-Lichtfeld der Zusatz-Beleuchtungseinheit (2). Die eingeschaltete Zusatz-Beleuchtungseinheit (2) vermag den Kontrast der Beleuchtungsvorrichtung (100) zu reduzieren.

## Beschreibung

Die Erfindung betrifft eine Beleuchtungsvorrichtung und drei Beleuchtungsverfahren, welche in vielen Fällen dazu führen, eine Oberfläche gut geeignet für die jeweilige Anwendung zu beleuchten.

Eine mögliche Anwendung der Erfindung ist eine Beleuchtungsvorrichtung, die einen medizinischen Operationstisch beleuchtet und daher auch als OP-Leuchte bezeichnet wird.

Der Erfindung liegt die Aufgabe zugrunde, eine Beleuchtungsvorrichtung und ein Beleuchtungsverfahren bereitzustellen, die ergonomischer als bekannte Vorrichtungen und Verfahren sind.

Die Aufgabe wird durch eine Beleuchtungsvorrichtung mit den Merkmalen des Anspruchs 1 und durch ein Beleuchtungsverfahren mit den Merkmalen der Ansprüche 16, 17 und 18 gelöst. Vorteilhafte Ausgestaltungen der erfindungsgemäßen Beleuchtungsvorrichtung sind, soweit sinnvoll, auch vorteilhafte Ausgestaltungen der erfindungsgemäßen Beleuchtungsverfahren und umgekehrt.

Im Folgenden werden zunächst einige Begriffe definiert, die eine Beleuchtungseinheit betreffen. Diese Begriffe gelten für die erfindungsgemäße Beleuchtungsvorrichtung sowie für die beiden Beleuchtungseinheiten und, soweit sinnvoll, auch für die einzelnen Lichtquellen der Beleuchtungseinheiten.

Die "Beleuchtungsstärke" (engl. Illuminance", Ev) beschreibt den Lichtstrom pro Flächeneinheit, der auf eine Fläche trifft. Die SI-Einheit ist Lux = Lumen/m^2. In einer Ebene, die senkrecht auf der optischen Mittelachse einer Beleuchtungseinheit steht, nimmt die Beleuchtungsstärke der Beleuchtungseinheit typischerweise den maximalen Wert im Schnittpunkt der optischen Mittelachse mit dieser Ebene an. In der Regel variiert dieser maximale Beleuchtungsstärken-Wert entlang der optischen Mittelachse, also mit dem Abstand zwischen der Beleuchtungseinheit und der beleuchteten Fläche, und zwar wie folgt: Ausgehend von der Beleuchtungseinheit steigt dieser maximale Wert an, bis er ein Maximum erreicht, und nimmt dann wieder ab. Der Wert an diesem Maximum wird als die "maximale Beleuchtungsstärke im Raum" der Beleuchtungseinheit bezeichnet. In der Regel tritt die maximale Beleuchtungsstärke im Raum auf der optischen Mittelachse auf. Der Bereich, an dem die Beleuchtungsstärke den maximalen Wert annimmt, kann auf einer beleuchteten Oberfläche oder vor der beleuchteten Oberfläche liegen. Falls das beleuchtete Objekt durchsichtig ist oder wäre, so kann der Bereich auch hinter dem Objekt liegen.

In der Regel ist die maximale Beleuchtungsstärke im Raum, den eine Beleuchtungseinheit erzielen kann, aufgrund der Konstruktion der Beleuchtungseinheit bekannt, insbesondere aufgrund der Beleuchtungsstärken der einzelnen Lichtquellen und den Positionierungen der erzeugten Lichtbündel relativ zueinander. Durch die Konstruktion der Beleuchtungseinheit oder aufgrund von vorab durchgeführten Messungen ist weiterhin bekannt, wie der maximale Wert der Beleuchtungsstärke auf der optischen Mittelachse vom Abstand abhängt. Diese funktionale Abhängigkeit der Beleuchtungsstärke vom Abstand kann von weiteren einstellbaren oder konstruktionsbedingt vorgegebenen Parametern der Beleuchtungseinheit abhängen.

Verschiedene Parameter einer Beleuchtungseinheit hängen von dem Abstand zwischen der Beleuchtungseinheit und einer beleuchteten Oberfläche ab. Daher werden diese Parameter in der Regel auf einen vorgegebenen Referenzabstand bezogen. Im Falle einer Operationsleuchte beträgt dieser Referenzabstand häufig 1 m. Aus der Konstruktion der Beleuchtungseinheit sind die maximale Beleuchtungsstärke im Raum und die funktionale Abhängigkeit der maximalen Beleuchtungsstärke vom Abstand bekannt. Daher oder aufgrund von vorab durchgeführten Messungen ist auch die maximale Beleuchtungsstärke im Referenzabstand bekannt. Oft ist eine Beleuchtungseinheit so konstruiert, dass die maximale Beleuchtungsstärke im Raum im Referenzabstand auftritt. Die maximale Beleuchtungsstärke im Referenzabstand wird in bevorzugten Realisierungsformen von verschiedenen Ausgestaltungen der Erfindung verwendet, was weiter unten beschrieben wird.

Eine Beleuchtungseinheit erzeugt auf einer beleuchteten Oberfläche ein Lichtfeld. Dieses Lichtfeld weist eine Beleuchtungsstärke auf, die über die beleuchtete Oberfläche variiert und in einem Punkt oder einem Bereich der Oberfläche ein Maximum annimmt.

Falls die Oberfläche eben ist und senkrecht auf der optischen Mittelachse der Beleuchtungseinheit steht, so ist der Bereich auf der Oberfläche, in dem die durchschnittliche Beleuchtungsstärke x % der maximalen Beleuchtungsstärke beträgt, typischerweise ein Kreis. Als durchschnittliche Beleuchtungsstärke wird bevorzugt ein Mittelwert über die jeweilige Beleuchtungsstärke in mehreren Punkten auf diesem Kreis verwendet, insbesondere in mindestens vier gleichmäßig auf dem Kreis verteilten Punkten. Der Durchmesser dieses Kreises wird oft auch als Lichtfeld-Durchmesser dₓ bezeichnet und hängt von dem Abstand zwischen der Beleuchtungseinheit und der beleuchteten Oberfläche ab. Daher wird der Lichtfeld-Durchmesser dₓ oft auf den vorgegebenen Referenzabstand zwischen der Beleuchtungseinheit und der beleuchteten Oberfläche bezogen, beispielsweise auf den bereits erwähnten Referenzabstand von 1 m. Bei einer medizinischen Beleuchtungseinheit ist häufig x = 10 %, manchmal auch x = 50%, und der Lichtfeld-Durchmesser ist der Durchmesser, bei dem die Beleuchtungsstärke ein Zehntel oder die Hälfte der maximalen Beleuchtungsstärke auf der Oberfläche beträgt. Bei einer Beleuchtungseinheit für einen Operationstisch liegt d₁₀ typischerweise zwischen 13 cm und 35 cm. Häufig erzeugt eine solche Beleuchtungseinheit ein relativ scharf abgegrenztes (fokussiertes) Lichtfeld, sodass 2*d₅₀>d₁₀ gilt.

Eine Beleuchtungseinheit weist eine optische Mittelachse auf. Häufig tritt die maximale Beleuchtungsstärke auf einer beleuchteten Ebene, die senkrecht auf der optischen Achse steht, im Schnittpunkt der optischen Mittelachse mit der beleuchteten Ebene auf. Eine dreidimensionale Darstellung des Lichtfelds auf der Oberfläche, wobei die Oberfläche sich in der x-y-Ebene der Darstellung erstreckt, die optische Achse in der z-Achse liegt und auf der z-Achse die jeweilige Beleuchtungsstärke in einem Punkt (x, y) aufgetragen ist, hat häufig idealerweise die Form einer Glockenkurve, die rotationssymmetrisch zur optischen Mittelachse ist.

Weiter oben wurde der Lichtfeld-Durchmesser dₓ definiert. Der Parameter Lichtfeld-Durchmesser dₓ alleine beschreibt das Lichtfeld einer Beleuchtungseinheit nicht vollständig. Insbesondere beschreibt dieser Parameter dₓ nicht, wie groß die Beleuchtungsstärke auf der beleuchteten Oberfläche außerhalb des Kreises mit dem Durchmesser dₓ um den Punkt maximaler Beleuchtungsstärke ist. Die gerade beschriebene dreidimensionale Glockenkurve kann außerhalb des Kreises mit dem Durchmesser dₓ steil oder flach abfallen. Häufig wird die vereinfachende Annahme getroffen, dass außerhalb des Kreises mit dem Durchmesser dₓ überhaupt kein Licht mit einer relevanten Helligkeit vorhanden ist. Diese Annahme ist aber oft falsch.

Ein messbarer und bevorzugt einstellbarer Parameter für das Lichtfeld einer Beleuchtungseinheit außerhalb des Kreises mit dem Durchmesser dₓ wird nachfolgend definiert. Dieser Parameter wurde bislang nicht öffentlich zugänglich beschrieben. Weil das Lichtfeld außerhalb des Kreises mit dem Durchmesser dₓ den von einem Menschen wahrgenommenen Kontrast zwischen einem hellen und einem dunklen Bereich auf einer beleuchteten Oberfläche beeinflusst, wird der Parameter abkürzend als "Kontrast" bezeichnet. Der Parameter hängt weder von der maximalen Beleuchtungsstärke Evₘₐₓ noch vom Lichtfeld-Durchmesser dₓ ab.

Gemäß der neuartigen Definition wird der Kontrast definiert als der Quotient aus
- der maximalen Beleuchtungsstärke Evₘₐₓ und
- der mittleren Beleuchtungsstärke Ev(x*d₁₀) auf einem Kreis mit dem Durchmesser x*d₁₀ um einen Punkt mit maximaler Beleuchtungsstärke herum,
also Kontrast = Evₘₐₓ / Ev(x*d₁₀). Der Faktor x ist hierbei größer als 1 und liegt bevorzugt zwischen 1,5 und 3. Der Erfinder hat in internen Versuchen festgestellt, dass x = 2 ein besonders gut geeigneter Wert ist, also Kontrast = Evₘₐₓ / Ev(2*d₁₀). Je geringer die erzielte Beleuchtungsstärke außerhalb des Kreises mit dem Durchmesser d₁₀ ist, desto größer ist der Kontrast einer Beleuchtungseinheit gemäß dieser Definition.

Nachfolgend wird die erfindungsgemäße Beleuchtungsvorrichtung beschrieben. Die erfindungsgemäßen Beleuchtungsverfahren werden unter Verwendung einer derartigen Beleuchtungsvorrichtung durchgeführt.

Die erfindungsgemäße Beleuchtungsvorrichtung umfasst eine Haupt-Beleuchtungseinheit und eine Zusatz-Beleuchtungseinheit. Die Haupt-Beleuchtungseinheit umfasst mindestens zwei Gruppen von Lichtquellen, die Zusatz-Beleuchtungseinheit mindestens eine Lichtquellen-Gruppe, bevorzugt ebenfalls mindestens zwei Gruppen von Lichtquellen. Jede Lichtquellen-Gruppe umfasst jeweils mindestens eine Lichtquelle, in einer Realisierungsform jeweils mehrere Lichtquellen. Jede Lichtquellen-Gruppe lässt sich unabhängig von jeder anderen Lichtquellen-Gruppe ansteuern, und durch die Ansteuerung lässt sich mindestens ein Parameter der Lichtquellen-Gruppe ändern, insbesondere die maximale Beleuchtungsstärke und optional ein Lichtspektrum. Bevorzugt gehört jede Lichtquelle zu genau einer Lichtquellen-Gruppe und somit entweder zur Haupt-Beleuchtungseinheit oder zur Zusatz-Beleuchtungseinheit. In einer Ausgestaltung lässt sich jede Lichtquelle der Beleuchtungsvorrichtung einzeln ansteuern - mit anderen Worten: Jede Lichtquellen-Gruppe umfasst genau eine Lichtquelle.

Die Beleuchtungsvorrichtung vermag eine Oberfläche zu beleuchten. Diese Oberfläche ist beispielsweise ein Operationstisch oder die Oberfläche eines Patienten auf dem Operationstisch, und die Beleuchtungsvorrichtung beleuchtet diese Oberfläche senkrecht oder schräg von oben.

Die beiden Beleuchtungseinheiten der erfindungsgemäßen Beleuchtungsvorrichtung vermögen auf der beleuchteten Oberfläche jeweils ein Lichtfeld zu erzielen. Die Beleuchtungsstärke, welche die Beleuchtungseinheit auf der Oberfläche erzielt, variiert über die Oberfläche. In jedem Punkt der beleuchteten Oberfläche tritt jeweils eine Beleuchtungsstärke auf. Die beiden Beleuchtungsstärken, welche die beiden Beleuchtungseinheiten in einem Punkt der Oberfläche erzielen, addieren sich. Das gesamte Lichtfeld, welches die Beleuchtungsvorrichtung auf der Oberfläche erzielt, setzt sich daher additiv aus den Lichtfeldern der beiden Beleuchtungseinheiten zusammen.

Die erfindungsgemäße Beleuchtungsvorrichtung vermag eine Beleuchtungsstärken-Vorgabe zu erfassen. Diese Beleuchtungsstärken-Vorgabe legt die maximale Beleuchtungsstärke fest, welche die Beleuchtungsvorrichtung erzielen soll. Die maximal erzielte Beleuchtungsstärke ist kleiner als oder gleich der Beleuchtungsstärke, die die Beleuchtungsvorrichtung maximal erzielen kann (maximal erzielbare Beleuchtungsstärke). Bevorzugt beziehen sich die Beleuchtungsstärken-Vorgabe und die maximal erzielte Beleuchtungsstärke auf einen vorgegebenen Referenzabstand, insbesondere auf den oben erwähnten Referenzabstand von 1m. Die maximal erzielbare Beleuchtungsstärke ist in der Regel durch die Konstruktion der Beleuchtungsvorrichtung vorgegeben. Die Beleuchtungsstärken-Vorgabe kann von einem Benutzer oder von einer übergeordneten Steuerung oder Regelung stammen und kann insbesondere ein absoluter Wert oder ein Anteil der maximal erzielbaren Beleuchtungsstärke oder auch eine geforderte Veränderung (Inkrement) gegenüber dem aktuellen Wert sein.

Erfindungsgemäß ist die Beleuchtungsvorrichtung wie folgt ausgestaltet: Mindestens dann, wenn zwei Voraussetzungen erfüllt sind, werden zwei erfindungsgemäße Wirkungen erzielt.

Die beiden Voraussetzungen sind die folgenden:
- Der Abstand zwischen der Beleuchtungsvorrichtung und der beleuchteten Oberfläche liegt in einem vorgegebenen Abstandsbereich. Bevorzugt ist dieser Abstandsbereich der Bereich von 0,7 m bis 1,5 m. Bei einem Einsatz eine Operationsleuchte als der Beleuchtungsvorrichtung tritt typischerweise zwischen einem Operationstisch und der Beleuchtungsvorrichtung ein Abstand in diesem Abstandsbereich auf.
- Die maximale Beleuchtungsstärke, welche die Beleuchtungsvorrichtung gemäß der Beleuchtungsstärken-Vorgabe erzielen soll, beträgt mindestens 20% der maximal erzielbaren Beleuchtungsstärke, bevorzugt mindestens 50%.

Die erfindungsgemäß erzielten Wirkungen sind die folgenden:
- Die maximale Beleuchtungsstärke, welche die Zusatz-Beleuchtungseinheit auf der Oberfläche erzielt, beträgt mindestens 1% und höchstens 15% der maximalen Beleuchtungsstärke, welche die Haupt-Beleuchtungseinheit auf der Oberfläche erzielt. Bevorzugt liegt die maximale Beleuchtungsstärke der Zusatz-Beleuchtungseinheit zwischen 2% und 5% der maximalen Beleuchtungsstärke der Haupt-Beleuchtungseinheit. Dies gilt natürlich nur, wenn beide Beleuchtungseinheiten eingeschaltet sind.
- Das dₓ-Lichtfeld der Haupt-Beleuchtungseinheit auf der Oberfläche weist eine um mindestens 50% kleinere Fläche auf als das dₓ-Lichtfeld der Zusatz-Beleuchtungseinheit, bevorzugt eine um mindestens 80% kleinere Fläche. Unter dem Begriff "dₓ-Lichtfeld einer Beleuchtungseinheit" wird derjenige Bereich auf der beleuchteten Oberfläche verstanden, in dem die Beleuchtungsstärke wenigstens x % der maximalen Beleuchtungsstärke beträgt. Dieser Bereich wird im Falle einer ebenen Oberfläche, die senkrecht auf der optischen Mittelachse steht, von einem Kreis mit dem Lichtfeld-Durchmesser dₓ umgrenzt und hat dann in der Regel die Form eines Vollkreises.

Erfindungsgemäß erzielt die Beleuchtungsvorrichtung diese beiden Wirkungen mindestens dann, wenn die beiden Voraussetzungen erfüllt sind. Der Abstandsbereich zwischen 0,7 m und 1,5 m ist der Bereich, in dem bei einem Einsatz der typische Abstand zwischen einer medizinischen Operationsleuchte und einem zu behandelnden Patienten auf einem Operationstisch liegt. Die oben beschriebenen Wirkungen können auch außerhalb dieses Abstandsbereichs auftreten, treten aber nicht notwendigerweise dort auf. Bei einer medizinischen Behandlung soll die maximale Beleuchtungsstärke der Beleuchtungsvorrichtung in der Regel mindestens 20% der maximal erzielbaren Beleuchtungsstärke betragen. Eine geringere maximale Beleuchtungsstärke wird in der Regel nur dann verwendet, wenn die Beleuchtungsvorrichtung aktuell nicht für die Beleuchtung eines Patienten verwendet wird, sondern beispielsweise für die Beleuchtung des leeren Operationstischs oder Operationsraums.

Einerseits wird insbesondere in medizinischen Anwendungen häufig ein hoher Kontrast gewünscht, um das abgestrahlte Licht besonders gut auf einen bestimmten Bereich der Oberfläche des Patienten zu bündeln. Dieser Bereich soll hell beleuchtet werden. Andererseits kann ein sehr hoher Kontrast dazu führen, dass die Augen eines Arztes relativ rasch ermüden, insbesondere wenn der Arzt häufig abwechselnd in einen stark und in einen schwach beleuchteten Bereich blickt, beispielsweise abwechselnd auf den Bereich, in dem eine Operation stattfindet, und auf den Bereich, in dem ein benötigtes medizinisches Instrument liegt. Falls eine Kamera Bilder von der Operation erzeugt, damit diese Bilder auf einer räumlich entfernten Anzeigeeinheit dargestellt werden, beispielsweise für Studenten, so kann sich häufig bei einem sehr hohen Kontrast die Kamera nicht ausreichend gut an die wechselnde Helligkeit anpassen. Auch möglich ist, dass ein Bild von der Kamera sehr helle und sehr dunkle Bereiche aufweist, so dass die Kamera sich nicht automatisch dergestalt einstellen kann, dass sowohl helle Bereiche als auch dunkle Bereiche gut erkennbar dargestellt werden.

Wie oben hergeleitet, lässt sich der auf der Oberfläche erzielte Kontrast quantitativ als der Quotient zwischen der maximalen Beleuchtungsstärke Evₘₐₓ der Beleuchtungsvorrichtung auf der beleuchteten Oberfläche und der Beleuchtungsstärke Ev(x*d₁₀) auf der Oberfläche im Abstand x/2*d₁₀ von dem Punkt maximaler Beleuchtungsstärke spezifizieren, also Kontrast gleich Evₘₐₓ / Ev(x*d₁₀) mit einem Faktor x größer 1, bevorzugt x zwischen 1,5 und 3, besonders bevorzugt x gleich 2.

In vielen Fällen reduziert die eingeschaltete Zusatz-Beleuchtungseinheit den erzielten Kontrast. Bei einer medizinischen Beleuchtungseinheit, die nur eine Haupt-Beleuchtungseinheit mit mehreren Lichtquellen aufweist, liegt der Kontrast typischerweise zwischen 50 und 400. Die Zusatz-Beleuchtungseinheit lässt sich so ausgestalten, dass sie den Kontrast um einen Faktor, der zwischen 1,5 und 10 liegt, zu reduzieren vermag, bevorzugt um einen Faktor zwischen 3 und 6. Die Haupt-Beleuchtungseinheit braucht nicht verändert zu werden, um den Kontrast zu reduzieren.

Erfindungsgemäß ist die maximale Beleuchtungsstärke der Zusatz-Beleuchtungseinheit erheblich kleiner als die der Haupt-Beleuchtungseinheit, aber umgekehrt das Lichtfeld, und insbesondere der Lichtfeld-Durchmesser dₓ, der Haupt-Beleuchtungseinheit höchstens halb so groß wie das Lichtfeld bzw. der Lichtfeld-Durchmesser dₓ der Zusatz-Beleuchtungseinheit, und zwar wenigstens für ein vorgegebenes x von beispielsweise 10%. Daher wird im Wesentlichen ein relativ enger Bereich auf der beleuchteten Oberfläche hell beleuchtet, beispielsweise ein Bereich des Körpers des Patienten, in oder an dem eine Operation stattfindet. Andererseits wird bei eingeschalteter oder dauerhaft leuchtender Zusatz-Beleuchtungseinheit ein größerer Bereich auf der Oberfläche schwächer beleuchtet, insbesondere um den Kontrast zu mindern, verglichen mit einer Ausgestaltung ohne oder mit ausgeschalteter Zusatz-Beleuchtungseinheit.

Erfindungsgemäß liegt die maximale Beleuchtungsstärke der Zusatz-Beleuchtungseinheit in einem Bereich zwischen 1 % und 15 % der maximalen Beleuchtungsstärke der Haupt-Beleuchtungseinheit, besonders bevorzugt in einem Bereich zwischen 2 % und 5 %. Dieses Merkmal gilt für den gesamten Abstandsbereich und bevorzugt insbesondere für den Referenzabstand. Das Merkmal führt dazu, dass die Zusatz-Beleuchtungseinheit nur einen relativ geringen Einfluss auf die gesamte maximale Beleuchtungsstärke, welche die Beleuchtungsvorrichtung insgesamt auf der beleuchteten Oberfläche erzielt, nimmt. Insbesondere ist es möglich, die Zusatz-Beleuchtungseinheit einzuschalten und auszuschalten oder deren maximal erzielbare Beleuchtungsstärke zu verändern, ohne die maximale Beleuchtungsstärke der Beleuchtungsvorrichtung erheblich zu verändern. Besonders bevorzugt bleibt die maximale Beleuchtungsstärke, die die Beleuchtungsvorrichtung auf der Oberfläche erzielt, idealerweise unverändert, wenn die Zusatz-Beleuchtungseinheit eingeschaltet oder ausgeschaltet wird. Bei unveränderter Haupt-Beleuchtungseinheit und / oder unveränderter maximaler Beleuchtungsstärke brauchen sich die Augen eines Arztes oder sonstigen Menschen, der auf den Bereich mit maximaler Beleuchtungsstärke blickt, in der Nähe der Oberfläche nur wenig oder sogar gar nicht an eine veränderte Helligkeit anzupassen, wenn die Zusatz-Beleuchtungseinheit eingeschaltet oder ausgeschaltet wird.

Erfindungsgemäß ist das dₓ-Lichtfeld der Haupt-Beleuchtungseinheit höchstens halb so groß wie das dₓ-Lichtfeld der Zusatz-Beleuchtungseinheit, besonders bevorzugt höchstens ein Viertel so groß. Diese Ausgestaltung führt einerseits zu einer besonders fokussierten Haupt-Beleuchtungseinheit und andererseits zu einer Zusatz-Beleuchtungseinheit, die einen relativ großen Bereich auf der Oberfläche beleuchtet.

Die maximale Beleuchtungsstärke, welche die Zusatz-Beleuchtungseinheit auf der Oberfläche erzielt, beträgt erfindungsgemäß mindestens 1% und höchstens 15% der maximalen Beleuchtungsstärke, welche die Haupt-Beleuchtungseinheit auf der Oberfläche erzielt. Bevorzugt beträgt die maximal im Referenzabstand erzielbare Beleuchtungsstärke der Zusatz-Beleuchtungseinheit mindestens 1% und höchstens 15% der im Referenzabstand erzielbaren maximalen Beleuchtungsstärke der Haupt-Beleuchtungseinheit. Wie bereits dargelegt, ist die maximal erzielbare Beleuchtungsstärke typischerweise ein durch die Konstruktion der Beleuchtungseinheit vorgegebener Parameter.

Bevorzugt ist das Lichtfeld der Haupt-Beleuchtungseinheit vollständig im Lichtfeld der Zusatz-Beleuchtungseinheit enthalten. Dieses Merkmal stellt mit noch größerer Zuverlässigkeit sicher, dass einerseits ein zentraler Bereich des Lichtfelds, das die Beleuchtungsvorrichtung auf der Oberfläche erzeugt, stark beleuchtet wird und andererseits ein zu hoher Kontrast vermieden wird. Besonders bevorzugt stimmt der Mittelpunkt des Lichtfelds der Haupt-Beleuchtungseinheit mit dem Mittelpunkt des Lichtfeldes der Zusatz-Beleuchtungseinheit überein.

Die Position und Orientierung der Zusatz-Beleuchtungseinheit relativ zur Haupt-Beleuchtungseinheit lässt sich bevorzugt nicht verändern. Besonders bevorzugt sind beide Beleuchtungseinheiten an einem Träger und / oder in einem Gehäuse der Beleuchtungsvorrichtung montiert. Bevorzugt lassen sich die Position und die Orientierung der Beleuchtungsvorrichtung relativ zur beleuchteten Oberfläche verändern, beispielsweise manuell von einem Benutzer mithilfe eines Griffs an dem oben erwähnten Träger oder Gehäuse oder auch von einem Stellantrieb. Bevorzugt ist die Beleuchtungsvorrichtung mittels einer Trageeinheit an einer Decke oder einer Wand angebracht, wobei die Trageeinheit mindestens ein Gelenk umfasst.

Bevorzugt lässt sich die Zusatz-Beleuchtungseinheit einschalten und ausschalten. Besonders bevorzugt sind drei verschiedene Modi möglich, in denen die Beleuchtungsvorrichtung betrieben werden kann:
- Haupt-Beleuchtungseinheit eingeschaltet, Zusatz-Beleuchtungseinheit ausgeschaltet,
- Haupt-Beleuchtungseinheit und Zusatz-Beleuchtungseinheit eingeschaltet,
- Haupt-Beleuchtungseinheit ausgeschaltet, Zusatz-Beleuchtungseinheit eingeschaltet - dies vorzugsweise nur zur Beleuchtung des leeren Operationstischs.

Besonders bevorzugt vermag die Beleuchtungsvorrichtung eine Benutzervorgabe zu erfassen. Diese Benutzervorgabe legt fest, ob die Zusatz-Beleuchtungseinheit eingeschaltet oder ausgeschaltet sein soll. Ein Steuergerät der Beleuchtungsvorrichtung vermag abhängig von der Benutzervorgabe die Zusatz-Beleuchtungseinheit einzuschalten bzw. auszuschalten. Besonders bevorzugt vermag das Steuergerät auch die Haupt-Beleuchtungseinheit abhängig von einer Benutzervorgabe einzuschalten oder auszuschalten.

Das Merkmal mit den drei Modi und das Merkmal mit der Benutzervorgabe erlauben es insbesondere einem Benutzer, wahlweise ein kleineres Lichtfeld (nur Haupt-Beleuchtungseinheit eingeschaltet) oder einen geringeren Kontrast (beide Beleuchtungseinheiten eingeschaltet) herzustellen. Möglich ist auch, einen relativ großen Bereich der Oberfläche nur relativ schwach zu beleuchten (nur Zusatz-Beleuchtungseinheit eingeschaltet). Natürlich ist es auch möglich, die Beleuchtungsvorrichtung und damit beide Beleuchtungseinheiten auszuschalten, Insbesondere wenn die Beleuchtungsvorrichtung aktuell nicht verwendet wird.

In einer bevorzugten Ausgestaltung umfasst die Beleuchtungsvorrichtung ein signalverarbeitendes Steuergerät (control unit). Dieses Steuergerät vermag Signale von Sensoren und / oder Eingabeeinheiten der Beleuchtungsvorrichtung zu empfangen, insbesondere von einem Abstandssensor oder von einer Eingabeeinheit für benutzervorgaben. Das Steuergerät vermag optional einen Datenspeicher mit konstruktionsbedingten Eigenschaften und / oder aktuellen Einstellungen der Beleuchtungsvorrichtung auszulesen und die Haupt-Beleuchtungseinheit und / oder die Zusatz-Beleuchtungseinheit anzusteuern und damit zu bewirken, dass das jeweils emittierte Licht sich ändert. Insbesondere vermag diese Steuergerät eine Vorgabe von einem Benutzer oder auch von einer übergeordneten Steuerung zu erfassen oder zu empfangen und zu verarbeiten und mindestens eine Beleuchtungseinheit automatisch an die erfasste / empfangene Vorgabe anzupassen, indem das Steuergerät diese Beleuchtungseinheit ansteuert.

Erfindungsgemäß vermag die Beleuchtungsvorrichtung eine Beleuchtungsstärken-Vorgabe zu erfassen. Beispielsweise gibt ein Benutzer vor, wie groß die erzielte maximale Beleuchtungsstärke im Referenzabstand der Beleuchtungsvorrichtung oder der Haupt-Beleuchtungseinheit relativ zur maximal im Referenzabstand erzielbaren Beleuchtungsstärke sein soll. Oder ein Benutzer dimmt die Beleuchtungsvorrichtung, und zwar bevorzugt schrittweise, ohne notwendigerweise eine gewünschte Beleuchtungsstärke vorzugeben, und reduziert dadurch die maximal erzielbare Beleuchtungsstärke im Referenzabstand, und zwar in der Regel schrittweise.

Das Steuergerät erfasst die Beleuchtungsstärken-Vorgabe und steuert mindestens eine Beleuchtungseinheit der erfindungsgemäßen Beleuchtungsvorrichtung mit dem Ziel an, dass der Beleuchtungsstärken-Quotient unverändert bleibt. Die Ansteuerung der Beleuchtungseinheit hängt von der Beleuchtungsstärken-Vorgabe ab. in einer Ausgestaltung ist ein Ziel bei der Ansteuerung, dass die Beleuchtungsstärken-Vorgabe erfüllt wird

In mehreren Ausgestaltungen ist ein Ziel der Ansteuerung, den Einfluss der Zusatz-Beleuchtungseinheit relativ gering zu halten, insbesondere deren Einfluss im Wesentlichen darauf zu beschränken, den Kontrast zu mindern und / oder einen Bereich außerhalb des Haupt-Lichtfelds zu beleuchten. Nachfolgend werden diese Ausgestaltungen beschrieben.

Verschiedene Ausgestaltungen führen dazu, dass unterschiedliche Eigenschaften des dₓ-Lichtfelds, welches die Beleuchtungsvorrichtung erzielt, nicht wesentlich verändert werden, wenn die maximale Beleuchtungsstärke, welche die Zusatz-Beleuchtungseinheit zu erzeugen vermag, und / oder der Lichtfeld-Durchmesser verändert werden, insbesondere wenn die Zusatz-Beleuchtungseinheit eingeschaltet oder ausgeschaltet wird. Nachfolgend werden verschiedene Ausgestaltungen beschrieben, wie das Steuergerät dieses Ziel automatisch erreicht.

In einer Ausgestaltung vermag das Steuergerät automatisch die maximale Beleuchtungsstärke, welche die Haupt-Beleuchtungseinheit auf der Oberfläche erzeugt, und die maximale Beleuchtungsstärke, welche die Zusatz-Beleuchtungseinheit auf der Oberfläche erzeugt, zu ermitteln. Bevorzugt verwendet das Steuergerät hierfür die maximale Beleuchtungsstärke im Referenzabstand der Haupt-Beleuchtungseinheit und die maximale Beleuchtungsstärke im Referenzabstand der Zusatz-Beleuchtungseinheit. Die maximale Beleuchtungsstärke im Referenzabstand ist die maximale Beleuchtungsstärke, welche die Beleuchtungseinheit aktuell im Referenzabstand erzielt, und ist kleiner oder gleich der maximal erzielbaren Beleuchtungsstärke im Referenzabstand. Die maximale Beleuchtungsstärke im Referenzabstand ist kleiner als die maximal erzielbare Beleuchtungsstärke, wenn die Beleuchtungseinheit gedimmt worden ist. Die maximal erzielbare Beleuchtungsstärke im Referenzabstand ist eine konstruktionsbedingte oder vorab gemessene und in der Regel unveränderliche Eigenschaft der Beleuchtungseinheit, die bevorzugt in einem Datenspeicher abgespeichert ist, auf den das Steuergerät Lesezugriff hat. Die maximal erzielte Beleuchtungsstärke im Referenzabstand hängt von der maximal erzielbaren Beleuchtungsstärke und in der Regel zusätzlich von einer veränderbaren Ansteuerung und / oder Einstellung der Beleuchtungseinheit ab. Die maximal auf der Oberfläche erzielte Beleuchtungsstärke hängt von der maximal im Referenzabstand erzielten Beleuchtungsstärke sowie vom Abstand zwischen der Beleuchtungsvorrichtung und der Oberfläche ab.

Erfindungsgemäß vermag die Beleuchtungsvorrichtung eine Beleuchtungsstärken-Vorgabe zu erfassen. Diese Beleuchtungsstärken-Vorgabe legt fest, welche maximale Beleuchtungsstärke die Beleuchtungsvorrichtung im Referenzabstand erzielen soll. Häufig legt die Beleuchtungsstärken-Vorgabe fest, dass die maximale Beleuchtungsstärke, welche die Beleuchtungsvorrichtung im Referenzabstand erzielen soll, zu verändern ist. Diese Beleuchtungsstärken-Vorgabe wird an das Steuergerät übermittelt.

In vielen Fällen bewirkt die Beleuchtungsvorrichtung eine besonders ergonomische Beleuchtung, wenn ein Beleuchtungsstärken-Quotient unverändert bleibt, und zwar zumindest dann, wenn beide Beleuchtungseinheiten eingeschaltet sind. Dieser Beleuchtungsstärken-Quotient bleibt insbesondere dann unverändert, wenn ein Parameter der Beleuchtungsvorrichtung oder einer Beleuchtungseinheit verändert wird. Als Beleuchtungsstärken-Quotient wird der Quotient zwischen
- der maximalen Beleuchtungsstärke, welche die Zusatz-Beleuchtungseinheit auf der Oberfläche erzielt, und
- der maximalen Beleuchtungsstärke, welche die Haupt-Beleuchtungseinheit auf der Oberfläche erzielt,
bezeichnet. Wie oben dargelegt, liegt dieser Beleuchtungsstärken-Quotient erfindungsgemäß zwischen 1 % und 15 %, besonders bevorzugt zwischen 2 % und 5 %, und zwar mindestens dann, wenn die beiden oben erwähnten Voraussetzungen erfüllt sind. Der Beleuchtungsstärken-Quotient ist natürlich nur dann größer als Null, wenn die Zusatz-Beleuchtungseinheit eingeschaltet ist.

Gemäß der gerade beschriebenen Ausgestaltung reagiert das Steuergerät automatisch auf eine Vorgabe, dass die maximale Beleuchtungsstärke der Beleuchtungsvorrichtung einen bestimmten Wert annehmen soll, beispielsweise einen bestimmten Prozentsatz der maximal erzielbaren Beleuchtungsstärke, oder vergrößert oder verkleinert werden soll. Das Steuergerät steuert mindestens eine der beiden Beleuchtungseinheiten an, wobei die Ansteuerung eine Reaktion auf die Erfassung der Beleuchtungsstärken-Vorgabe ist. Ein Ziel bei der Ansteuerung ist, dass der Beleuchtungsstärken-Quotient unverändert bleibt, und zwar auch dann, wenn die Beleuchtungsstärken-Vorgabe zu einer anderen maximal zu erzielenden Beleuchtungsstärke der Beleuchtungsvorrichtung führt.

In einer Realisierungsform wird ein gewünschter Wert für den Beleuchtungsstärken-Quotienten in einem Datenspeicher abgespeichert. Das Steuergerät hat wenigstens zeitweise Lesezugriff auf den Datenspeicher und ermittelt und verwendet den abgespeicherten Wert für den Beleuchtungsstärken-Quotienten, beispielsweise dann, wenn die Beleuchtungsvorrichtung nach einer Betriebspause eingeschaltet wird.

In einer anderen Realisierungsform löst der Schritt, dass eine Beleuchtungsstärken-Vorgabe erfasst wurde, die Schritte aus, dass das Steuergerät zunächst
- die maximale Beleuchtungsstärke, welche die Haupt-Beleuchtungseinheit auf der Oberfläche erzielt, und
- die maximale Beleuchtungsstärke, welche die Zusatz-Beleuchtungseinheit auf der Oberfläche erzielt,

ermittelt und hieraus den aktuellen Beleuchtungsstärken-Quotient herleitet. Dieser Beleuchtungsstärken-Quotient wird wenigstens zeitweise in einem Datenspeicher gespeichert. Das Steuergerät steuert die Haupt-Beleuchtungseinheit und / oder die Zusatz-Beleuchtungseinheit mit dem Ziel an, dass die Beleuchtungsstärken-Vorgabe erzielt wird und der Beleuchtungsstärken-Quotient trotz veränderter maximalen Beleuchtungsstärke unverändert bleibt. Diese andere Realisierungsform ermöglicht es, dass der Beleuchtungsstärken-Quotient aufgrund eines anderen Vorgangs verändert wird, beispielsweise als Folge einer entsprechenden explizite Vorgabe eines Benutzers, den Kontrast zu verändern.

Möglich ist, dass das Steuergerät automatisch eine Regelung (closed-loop control) durchführt. Die beiden Regelungsziele bei dieser Regelung sind, dass eine Vorgabe für die maximale Beleuchtungsstärke der Beleuchtungsvorrichtung oder der Haupt-Beleuchtungseinheit erfüllt wird und dass der vorgegebene oder ermittelte Beleuchtungsstärken-Quotient tatsächlich erreicht wird. Die Stellgrößen bei der Regelung sind die Ansteuerungen der beiden Beleuchtungseinheiten. Das Steuergerät ermittelt mindestens einmal, bei Bedarf wiederholt, die auf der Oberfläche erzielten maximalen Beleuchtungsstärken der beiden Beleuchtungseinheiten und leitet den aktuellen Beleuchtungsstärken-Quotient und hieraus eine Regelabweichung ab.

Gemäß der gerade beschriebenen Ausgestaltung ermittelt das Steuergerät die jeweilige maximale Beleuchtungsstärke, welche die Haupt-Beleuchtungseinheit und die Zusatz-Beleuchtungseinheit auf der beleuchteten Oberfläche erzielen. In einer Realisierungsform verwendet das Steuergerät die beiden maximal im Referenzabstand erzielten Beleuchtungsstärken als die Beleuchtungsstärken, welche die beiden Beleuchtungseinheiten auf der Oberfläche erzielen. Die beiden maximal im Referenzabstand erzielten Beleuchtungsstärken hängen von der jeweiligen maximal erzielbaren Beleuchtungsstärke (zwei konstruktionsbedingte Eigenschaften) und der jeweiligen Ansteuerung der Beleuchtungseinheiten ab. Beispielsweise werden die beiden Beleuchtungseinheiten so angesteuert, dass die jeweilige maximale Beleuchtungsstärke x % bzw. y % der maximal erzielbaren Beleuchtungsstärke beträgt. Falls der tatsächliche Abstand sich nur relativ wenig vom Referenzabstand unterscheidet, stimmen die Beleuchtungsstärken auf der Oberfläche relativ gut mit den maximal erzielten Beleuchtungsstärken im Referenzabstand überein.

In einer bevorzugten Ausgestaltung umfasst die Beleuchtungsvorrichtung zusätzlich mindestens einen Abstandssensor, der ein Maß für den Abstand zwischen sich selbst und der beleuchteten Oberfläche misst. Beispielsweise emittiert der Abstandssensor elektromagnetische Strahlung oder Schallwellen, die von der Oberfläche reflektiert werden, und misst die Laufzeit, die verstreicht, bis die reflektierte Strahlung bzw. die reflektierten Schallwellen wieder den Abstandssensor erreichen. Bevorzugt misst der Abstandssensor das Maß für den Abstand wenigstens entlang der oder parallel zu einer optischen Mittelachse der Beleuchtungsvorrichtung. Möglich ist aber auch, dass ein Winkel zwischen der Messrichtung des Abstandssensors und der optischen Mittelachse auftritt. Häufig tritt zwischen dem Abstandssensor und der optischen Mittelachse ein seitlicher Versatz auf. Die Orientierung der Messrichtung relativ zur optischen Mittelachse sowie der seitliche Versatz sind aus der Konstruktion der Beleuchtungsvorrichtung bekannt. Möglich ist, dass zwei voneinander beabstandete Abstandssensoren verwendet werden und aus den Messwerten dieser beiden Abstandssensoren ein mittlerer Abstand zwischen der Beleuchtungsvorrichtung und der beleuchteten Oberfläche hergeleitet wird. Diese Ausgestaltung berücksichtigt die Möglichkeit, dass die optische Mittelachse der Beleuchtungsvorrichtung schräg auf der beleuchteten Oberfläche steht.

Der Abstand, den der Abstandssensor misst, gilt mit ausreichender Genauigkeit für beide Beleuchtungseinheiten. In der Regel ist aus der jeweiligen Konstruktion einer Beleuchtungseinheit oder durch einen vorab durchgeführten Versuch ein funktionaler Zusammenhang bekannt, der festlegt, wie die maximale Beleuchtungsstärke auf der Oberfläche von der maximalen Beleuchtungsstärke im Referenzabstand und dem Abstand zwischen der Beleuchtungseinheit und der Oberfläche abhängt. Das Steuergerät erfasst
- den gemessenen Abstand,
- sowohl für die Haupt-Beleuchtungseinheit als auch für die Zusatz-Beleuchtungseinheit jeweils die maximal erzielte Beleuchtungsstärke im Referenzabstand und
- einen vorgegebenen oder ermittelten funktionalen Zusammenhang zwischen der auf der Oberfläche bewirkten maximalen Beleuchtungsstärke und dem Abstand.

Die maximal im Referenzabstand erzielten Beleuchtungsstärken und der funktionale Zusammenhang sind durch die Konstruktion der Beleuchtungsvorrichtung oder durch vorab durchgeführte Messungen bekannt und bevorzugt in einem Datenspeicher abgespeichert, auf den das Steuergerät Lesezugriff hat. Hieraus leitet das Steuergerät die jeweilige maximale Beleuchtungsstärke auf der Oberfläche ab.

Die Beleuchtungsvorrichtung erzeugt auf der beleuchteten Oberfläche ein Lichtfeld mit einer maximalen Beleuchtungsstärke und einem Lichtfeld-Durchmesser dₓ, z.B. d₁₀. Die maximale Beleuchtungsstärke der Beleuchtungsvorrichtung auf der Oberfläche hängt von den maximal im Referenzabstand erzielten Beleuchtungsstärken der beiden Beleuchtungseinheiten sowie vom Abstand zwischen der Beleuchtungsvorrichtung und der Oberfläche ab. In vielen Fällen lässt sich der Einfluss des Abstands vernachlässigen. In anderen Fällen lässt sich der Einfluss des Abstands rechnerisch berücksichtigen, oder der Abstand wird so wie gerade beschrieben gemessen.

In einer nachfolgend beschriebenen ersten Ausgestaltung wird automatisch sichergestellt, dass die maximale Beleuchtungsstärke, den die Beleuchtungsvorrichtung auf der Oberfläche erzeugt, unverändert bleibt, auch wenn die maximale Beleuchtungsstärke der Zusatz-Beleuchtungseinheit verändert wird, insbesondere als Folge einer Benutzereingabe. In einer zweiten Ausgestaltung wird automatisch sichergestellt, dass der Lichtfeld-Durchmesser konstant bleibt, den die Beleuchtungsvorrichtung auf der Oberfläche erzeugt, auch wenn der Lichtfeld-Durchmesser der Zusatz-Beleuchtungseinheit verändert wird. Diese beiden Ausgestaltungen lassen sich miteinander kombinieren.

Gemäß beiden Ausgestaltungen lässt die Zusatz-Beleuchtungseinheit sich wahlweise in einem ersten oder in einem zweiten Zustand betreiben, insbesondere als Folge einer entsprechenden Ansteuerung durch das Steuergerät. Beispielsweise ist die Zusatz-Beleuchtungseinheit in dem einen Zustand eingeschaltet und in dem anderen Zustand ausgeschaltet (maximale Beleuchtungsstärke gleich Null). Oder die Zusatz-Beleuchtungseinheit erzielt in dem einen Zustand die maximal erzielbare Beleuchtungsstärke und im anderen Zustand eine geringere maximale Beleuchtungsstärke, ist im anderen Zustand also gedimmt, aber nicht vollständig ausgeschaltet.

In jedem Zustand erzeugt die Zusatz-Beleuchtungseinheit auf der beleuchteten Oberfläche jeweils eine maximale Beleuchtungsstärke und ein Lichtfeld mit einem Lichtfeld-Durchmesser. Bei der ersten Ausgestaltung unterscheidet sich die maximale Beleuchtungsstärke, den die Zusatz-Beleuchtungseinheit im ersten Zustand erzielt, von der maximalen Beleuchtungsstärke im zweiten Zustand. Bei der zweiten Ausgestaltung unterscheidet sich der Lichtfeld-Durchmesser im ersten Zustand vom Lichtfeld-Durchmesser im zweiten Zustand.

Beide Ausgestaltungen sowie deren Kombination lassen sich anwenden, wenn die Zusatz-Beleuchtungseinheit zunächst in einem ersten Zustand und anschließend in einem abweichenden zweiten Zustand betrieben wird, beispielsweise eingeschaltet oder ausgeschaltet oder gedimmt oder aufgedreht wird oder der Lichtfeld-Durchmesser verändert wird.

Gemäß der ersten gerade beschriebenen Ausgestaltung sowie der Kombination vermag das Steuergerät zu ermitteln, welche maximale Beleuchtungsstärke die Beleuchtungsvorrichtung auf der Oberfläche erzielt, wobei die Zusatz-Beleuchtungseinheit im ersten Zustand ist. Bevorzugt verwendet das Steuergerät für diese Ermittlung
- die jeweilige maximal im Referenzabstand erzielte Beleuchtungsstärke der beiden Beleuchtungseinheiten,
- den gemessenen Abstand zwischen der Beleuchtungsvorrichtung und der Oberfläche sowie
- den jeweiligen funktionalen Zusammenhang zwischen dem Abstand und der maximalen Beleuchtungsstärke im Referenzabstand für die beiden Beleuchtungseinheiten.

Gemäß der zweiten Ausgestaltung sowie der Kombination vermag das Steuergerät zu ermitteln, welchen Lichtfeld-Durchmesser die Beleuchtungsvorrichtung auf der Oberfläche erzielt. In einer Realisierungsform verwendet es hierfür den Lichtfeld-Durchmesser im Referenzabstand. Das Steuergerät führt diese Ermittlung durch, während die Zusatz-Beleuchtungseinheit im ersten Zustand betrieben wird. Das Steuergerät erfasst eine Vorgabe, dass die Zusatz-Beleuchtungseinheit vom ersten Zustand in den zweiten Zustand überführt werden soll, und bewirkt, dass die Zusatz-Beleuchtungseinheit tatsächlich in den zweiten Zustand überführt wird.

Außerdem steuert das Steuergerät die Haupt-Beleuchtungseinheit an und bewirkt durch die Ansteuerung, dass die maximale Beleuchtungsstärke (erste Ausgestaltung) bzw. der Lichtfeld-Durchmesser (zweite Ausgestaltung), den die Haupt-Beleuchtungseinheit auf der Oberfläche erzielt, verändert wird. Durch die Ansteuerung verändert das Steuergerät einen Lichtstärke-Parameter (erste Ausgestaltung) bzw. einen Lichtfeld-Parameter (zweite Ausgestaltung) der Haupt-Beleuchtungseinheit. Der Lichtstärke-Parameter korreliert in einer Realisierungsform mit der maximalen Beleuchtungsstärke im Referenzabstand der Haupt-Beleuchtungseinheit, der Lichtfeld-Parameter mit dem Lichtfeld-Durchmesser im Referenzabstand. Insbesondere verändert das Steuergerät die im Referenzabstand erzielte maximale Beleuchtungsstärke oder das Lichtfeld im Referenzabstand, letzteres beispielsweise, indem einzelne Lichtquellen der Haupt-Beleuchtungseinheit eingeschaltet oder ausgeschaltet oder anderweitig verändert werden. Bei der ersten Ausgestaltung ist das Ziel der Ansteuerung, dass nach der Veränderung die maximale Beleuchtungsstärke, die die Beleuchtungsvorrichtung auf der Oberfläche erzielt, gleich der zuvor ermittelten maximalen Beleuchtungsstärke ist.

Wie bereits erwähnt, verändert in vielen Fällen die Zusatz-Beleuchtungseinheit den Kontrast, den die Beleuchtungsvorrichtung erzielt, verglichen mit einer Beleuchtungsvorrichtung ohne eine erfindungsgemäße Zusatz-Beleuchtungseinheit. Auch die maximale Beleuchtungsstärke der Zusatz-Beleuchtungseinheit beeinflusst den Kontrast. Der Kontrast der Beleuchtungsvorrichtung wird bevorzugt definiert als Evₘₐₓ / Ev(x*d₁₀), wobei Evₘₐₓ die maximale Beleuchtungsstärke der erfindungsgemäßen Beleuchtungsvorrichtung auf der beleuchteten Oberfläche und Ev(x*d₁₀) die mittlere Beleuchtungsstärke auf einem Kreis mit dem Durchmesser x*d₁₀ bezeichnet. Der Faktor x ist größer als 1. Bevorzugt liegt der Faktor x zwischen 1,5 und 3 und ist besonders bevorzugt gleich 2. Der Kontrast ist also der Quotient aus der maximalen Beleuchtungsstärke auf der Oberfläche und der mittleren Beleuchtungsstärke auf der Oberfläche in einem Kreis, wobei der Mittelpunkt dieses Kreises ein Punkt mit maximaler Beleuchtungsstärke ist und der Durchmesser dieses Kreises größer als der Lichtfeld-Durchmesser d₁₀ ist. In einer Ausgestaltung wird als Kontrast der Quotient aus der maximalen Beleuchtungsstärke im Referenzabstand und der mittleren Beleuchtungsstärke im Referenzabstand auf dem Kreis mit dem Durchmesser größer als der Lichtfeld-Durchmesser d₁₀ verwendet. In vielen Fällen hängt der Kontrast nur relativ wenig vom Abstand zwischen der Beleuchtungsvorrichtung und der Oberfläche ab.

In einer Ausgestaltung kann ein Benutzer eine Vorgabe für einen gewünschten Kontrast der Beleuchtungsvorrichtung vorgeben, insbesondere schrittweise verändern. Beispielsweise kann der Benutzer vorgeben, dass der Kontrast vergrößert oder verkleinert werden soll. Das Steuergerät erfasst diese Vorgabe für den gewünschten Kontrast und steuert mindestens eine Beleuchtungseinheit, bevorzugt die Zusatz-Beleuchtungseinheit, so an, dass die erfindungsgemäße Beleuchtungsvorrichtung den gewünschte Kontrast erzielt.

Bevorzugt steuert ein signalverarbeitendes Steuergerät die Zusatz-Beleuchtungseinheit dergestalt an, dass die maximale Beleuchtungsstärke und / oder der Lichtfeld-Durchmesser der Zusatz-Beleuchtungseinheit verändert wird und durch die Veränderung der gewünschte Kontrast erzielt wird. Möglich ist auch, dass nur die maximale Beleuchtungsstärke der Zusatz-Beleuchtungseinheit verändert werden kann, nicht aber ihr Lichtfeld-Durchmesser. Bevorzugt bleiben die Ansteuerung und die Einstellungen der Haupt-Beleuchtungseinheit konstant, während das Steuergerät bewirkt, dass der Kontrast, den die Beleuchtungsvorrichtung erzielt, verändert wird.

Möglich ist, dass ein Benutzer zwar den Kontrast der Beleuchtungsvorrichtung verändern möchte, jedoch der Lichtfeld-Durchmesser und / oder die maximale Beleuchtungsstärke auf der Oberfläche unverändert bleiben sollen, auch wenn der Kontrast verändert wird. In einer Ausgestaltung erfasst das Steuergerät die Vorgabe betreffend den Kontrast. Das Steuergerät steuert die Zusatz-Beleuchtungseinheit einerseits mit dem Ziel an, dass durch die Ansteuerung die Beleuchtungsvorrichtung den gewünschten Kontrast tatsächlich erzielt. Bevorzugt ist ein weiteres Ziel bei der Ansteuerung durch das Steuergerät, dass der Lichtfeld-Durchmesser und / oder die maximale Beleuchtungsstärke auf der Oberfläche unverändert bleiben.

Eine bevorzugte Realisierungsform, um die beiden gerade erwähnten Steuerungsziele oder Regelungsziele zu erreichen, ist das folgende Vorgehen:
- Das Steuergerät erfasst einen gewünschten Wert für den Kontrast der Beleuchtungsvorrichtung, wobei der Kontrast so wie oben beschrieben als Evₘₐₓ/Ev(x*d₁₀) definiert ist mit x > 1.
- Das Steuergerät ermittelt den Kontrast, den die Beleuchtungsvorrichtung aktuell erzielt.
- Der erzielte Kontrast wird wesentlich von der Zusatz-Beleuchtungseinheit beeinflusst. Um den erzielten Kontrast zu verändern, bewirkt das Steuergerät, dass die maximale Beleuchtungsstärke der Zusatz-Beleuchtungseinheit verändert wird.
- Falls die maximale Beleuchtungsstärke, welche die Beleuchtungsvorrichtung auf der Oberfläche erzielt, unverändert bleiben soll, bewirkt das Steuergerät zusätzlich, dass die maximale Beleuchtungsstärke der Haupt-Beleuchtungseinheit verändert wird. Eine Randbedingung bei dieser Veränderung ist, dass der ermittelte Kontrast beibehalten wird.
- Falls der Lichtfeld-Durchmesser der Beleuchtungsvorrichtung unverändert bleiben soll, bewirkt das Steuergerät zusätzlich, dass der Lichtfeld-Durchmesser der Haupt-Beleuchtungseinheit verändert wird. Wiederum ist eine Randbedingung, dass der ermittelte Kontrast beibehalten wird.

Eine gewünschte Vorgehensweise, um das oben beschriebene Vorgehen zu realisieren, ist das folgende: Erfindungsgemäß umfasst die Zusatz-Beleuchtungseinheit mehrere Gruppen von Lichtquellen, wobei jede Gruppe mindestens eine Lichtquelle umfasst. Die maximale Beleuchtungsstärke, den eine Gruppe von Lichtquellen der Zusatz-Beleuchtungseinheit erzielt, lässt sich unabhängig von der jeweiligen maximalen Beleuchtungsstärke jeder anderen Lichtquellen-Gruppe der Beleuchtungsvorrichtung verändern. In einer Ausgestaltung lässt sich auch der Lichtfeld-Durchmesser, den eine Lichtquellen-Gruppe der Zusatz-Beleuchtungseinheit erzielt, unabhängig vom jeweiligen Lichtfeld-Durchmesser jeder anderen Lichtquellen-Gruppe verändern. Das Steuergerät vermag jede Lichtquellen-Gruppe einzeln anzusteuern.

Die Haupt-Beleuchtungseinheit emittiert Licht in einem Lichtspektrum. Die Zusatz-Beleuchtungseinheit emittiert Licht in einem Lichtspektrum. Das jeweilige Lichtspektrum dieser beiden Beleuchtungseinheiten setzt sich aus den Lichtspektren der Lichtquellen dieser Beleuchtungseinheit zusammen. Jedes Lichtspektrum ist mit jeweils einer Farbtemperatur korreliert. Bevorzugt unterscheidet sich die korrelierte Farbtemperatur der Zusatz-Beleuchtungseinheit von der korrelierten Farbtemperatur der Haupt-Beleuchtungseinheit um höchstens 500 Kelvin, besonders bevorzugt um höchstens 200 Kelvin, insbesondere um höchstens 50 Kelvin.

Durch diese Ausgestaltung erzeugen die beiden Beleuchtungseinheiten in der Regel bei einem Betrachter den Eindruck, die gleiche Farbtemperatur aufzuweisen. Ein Grund: Das menschliche Auge vermag Farbtemperaturen in der Regel nur bei einem Unterschied von mindestens 500 Kelvin voneinander zu unterscheiden. Falls zwei Beleuchtungseinheiten die gleiche Beleuchtungsstärke aufweisen, so kann häufig ein menschliches Auge Farbtemperaturen bereits ab 200 Kelvin unterscheiden. Jedoch weisen die beiden Beleuchtungseinheiten der erfindungsgemäßen Beleuchtungsvorrichtung erfindungsgemäß unterschiedliche Beleuchtungsstärken auf.

In einer Ausgestaltung erfasst das Steuergerät eine Vorgabe für das Lichtspektrum der Haupt-Beleuchtungseinheit oder das der Beleuchtungsvorrichtung, beispielsweise eine Vorgabe für eine gewünschte korrelierte Farbtemperatur. Bevorzugt spezifiziert der Benutzer eine Vorgabe für das Lichtspektrum, insbesondere die korrelierte Farbtemperatur, der Beleuchtungsvorrichtung, und das Steuergerät verwendet diese Vorgabe als Vorgabe für die Haupt-Beleuchtungseinheit. Das Steuergerät bewirkt, dass das Lichtspektrum der Haupt-Beleuchtungseinheit entsprechend der Vorgabe verändert wird.

Das Steuergerät verändert gemäß dieser Ausgestaltung auch das Lichtspektrum der Zusatz-Beleuchtungseinheit. Bevorzugt unterscheiden sich die korrelierten Farbtemperaturen der beiden Beleuchtungseinheiten um höchstens 500 Kelvin, besonders bevorzugt um höchstens 200 Kelvin, voneinander. Bevorzugt verändert das Steuergerät das Lichtspektrum der Zusatz-Beleuchtungseinheit dergestalt, dass der absolute oder prozentuale Unterschied zwischen den beiden Farbtemperaturen unverändert bleibt, auch wenn die Farbtemperatur der Haupt-Beleuchtungseinheit verändert wird.

Bevorzugt umfasst die Zusatz-Beleuchtungseinheit mindestens zwei Lichtquellen, die als Zusatz-Lichtquellen bezeichnet werden. Besonders bevorzugt weisen die Lichtquellen der Zusatz-Beleuchtungseinheit insgesamt mindestens zwei unterschiedliche Lichtspektren und daher auch mindestens zwei unterschiedliche korrelierte Farbtemperaturen auf. Bevorzugt verändert das Steuergerät automatisch das Lichtspektrum der Zusatz-Beleuchtungseinheit, indem das Steuergerät bewirkt, dass die maximale Beleuchtungsstärke mindestens einer Lichtquelle, aber nicht jeder Lichtquelle der Zusatz-Beleuchtungseinheit verändert wird. Beispielsweise verändert das Steuergerät die anliegende elektrische Spannung oder die elektrische Stromstärke oder bei einem gepulsten Betrieb die Pulsweite oder Pulsfrequenz. Insbesondere dann, wenn die Lichtquellen der Zusatz-Beleuchtungseinheit als LEDs ausgestaltet sind, bewirkt das Steuergerät die Veränderung der maximalen Beleuchtungsstärke bevorzugt durch eine Pulsweitenmodulation. Hierbei wird das Verhältnis zwischen der Dauer eines Pulses, also eines Zeitraums, in dem elektrischer Strom durch die Lichtquelle fließt, und der Dauer einer Zeitspanne zwischen zwei aufeinanderfolgenden Impulsen verändert.

In einer Ausgestaltung ist die korrelierte Farbtemperatur der Zusatz-Beleuchtungseinheit um mindestens 500 Kelvin, bevorzugt um mindestens 1000 Kelvin, kleiner als die korrelierte Farbtemperatur der Haupt-Beleuchtungseinheit. Diese Ausgestaltung führt in vielen Fällen zu einer besonders ergonomischen Bestrahlung der Oberfläche.

Bevorzugt umfasst die Zusatz-Beleuchtungseinheit mindestens zwei Lichtquellen, die als Zusatz-Lichtquellen bezeichnet werden. Jede Zusatz-Lichtquelle strahlt jeweils ein Lichtbündel ab und weist jeweils eine optische Mittelachse auf. Jede optische Mittelachse schneidet die Oberfläche in einem Schnittpunkt. Dieser Schnittpunkt wird nachfolgend als ein "Zusatz-Schnittpunkt" bezeichnet. In der Regel erzielt jede Zusatz-Lichtquelle die maximale Beleuchtungsstärke in dem ihr zugeordneten Zusatz-Schnittpunkt, weil ihr Lichtbündel rotationssymmetrisch zur optischen Mittelachse der Lichtquelle ist. Der Schnittpunkt zwischen der optischen Mittelachse der Beleuchtungsvorrichtung und der beleuchteten Oberfläche wird als "Haupt-Schnittpunkt" bezeichnet. In der Regel erzielt die Haupt-Beleuchtungseinheit die maximale Beleuchtungsstärke im Haupt-Schnittpunkt.

In einer Ausgestaltung erzeugt auch die Zusatz-Beleuchtungseinheit die maximale Beleuchtungsstärke im Schnittpunkt der optischen Mittelachse mit der Oberfläche, also im Haupt-Schnittpunkt. Dies wird bevorzugt dadurch erreicht, dass der Haupt-Schnittpunkt und alle Zusatz-Schnittpunkte übereinstimmen.

In einer anderen Ausgestaltung tritt zwischen dem oder jedem Punkt, in dem die Zusatz-Beleuchtungseinheit ihre maximale Beleuchtungsstärke auf der Oberfläche erzeugt, einerseits und dem Haupt-Schnittpunkt andererseits jeweils ein Abstand auf. Dies wird bevorzugt dadurch erreicht, dass zwischen dem mindestens einem, bevorzugt jedem Zusatz-Schnittpunkt und dem Haupt-Schnittpunkt jeweils ein Abstand auftritt. Dieses Merkmal wird bevorzugt für jeden Abstand zwischen der Beleuchtungsvorrichtung und der beleuchteten Oberfläche, der im Abstandsbereich liegt, erzielt.

In einer Realisierungsform ist die Zusatz-Beleuchtungseinheit so ausgestaltet, dass sie die maximale Beleuchtungsstärke in mindestens einem Zusatz-Schnittpunkt erzielt, also die maximale Beleuchtungsstärke der Zusatz-Beleuchtungseinheit gleich der maximalen Beleuchtungsstärke der zugeordneten Lichtquelle ist. Möglich ist, dass die Zusatz-Beleuchtungseinheit in jedem Zusatz-Schnittpunkt die gleiche maximale Beleuchtungsstärke erzielt. Möglich ist auch, dass die maximale Beleuchtungsstärke der Zusatz-Beleuchtungseinheit zwischen zwei benachbarten Zusatz-Schnittpunkten auftritt. Bei jeweils einem Abstand zwischen einem Zusatz-Schnittpunkt und dem Haupt-Schnittpunkt hat das Lichtfeld der Zusatz-Beleuchtungseinheit nicht die Form einer Glockenkurve, sondern eher die eines Vulkankegels.

Bevorzugt beträgt die Beleuchtungsstärke, die eine Lichtquelle der Zusatz-Beleuchtungseinheit in dem ihr zugeordneten Zusatz-Schnittpunkt erzielt, also die maximale Beleuchtungsstärke, zwischen 1 % und 15 %, besonders bevorzugt zwischen 2 % und 5 %, der maximalen Beleuchtungsstärke der Haupt-Beleuchtungseinheit, in der Regel der Beleuchtungsstärke, welche die Haupt-Beleuchtungseinheit im Haupt-Schnittpunkt erzielt. Dies gilt wiederum bevorzugt wiederum für jeden Abstand im Abstandsbereich.

Bevorzugt weist die Zusatz-Beleuchtungseinheit mindestens drei Zusatz-Schnittpunkte auf, und die Zusatz-Schnittpunkte umgrenzen einen Bereich auf der beleuchteten Oberfläche. Der Haupt-Schnittpunkt liegt im Inneren dieses umgrenzen Bereichs.

Diese Ausgestaltung führt im besonders hohem Maße dazu, dass die Zusatz-Beleuchtungseinheit das relativ kleine dₓ-Lichtfeld der Haupt-Beleuchtungseinheit wenig beeinflusst, aber außerhalb des dₓ-Lichtfelds der Haupt-Beleuchtungseinheit für eine zusätzliche Beleuchtung der Oberfläche sorgt.

In einer bevorzugten Verwendung wird die erfindungsgemäße Beleuchtungsvorrichtung dafür benutzt, um einen Operationstisch zu beleuchten. Dieser Operationstisch ist dafür ausgestaltet, dass ein Patient auf ihm liegt und medizinisch behandelt wird. In der Regel befindet dieser Operationstisch sich in einem umschlossenen Raum in einem Gebäude oder in einem Fahrzeug, und der Operationstisch wird ausschließlich oder überwiegend von der Beleuchtungsvorrichtung beleuchtet, optional zusätzlich von mindestens einer Lichtquelle an einer Decke oder Wand des Raums, aber nur wenig vom Tageslicht. Als beleuchtete Oberfläche fungiert in der Regel die zur Beleuchtungsvorrichtung zeigende Oberfläche eines Patienten, der auf dem Operationstisch liegt.

Im Folgenden wird die Erfindung anhand eines Ausführungsbeispiels beschrieben. Hierbei zeigt
- Figur 1: in einer schematischen Querschnittsdarstellung eine erste Ausgestaltung der erfindungsgemäßen Beleuchtungsvorrichtung, wobei die optische Mittelachse in der Zeichenebene liegt;
- Figur 2: schematisch das Haupt-Lichtfeld und das Zusatz-Lichtfeld gemäß der ersten Ausgestaltung nach Figur 1;
- Figur 3: in einer schematischen Querschnittsdarstellung eine zweite Ausgestaltung der erfindungsgemäßen Beleuchtungsvorrichtung, wobei die optische Mittelachse in der Zeichenebene liegt;
- Figur 4: schematisch das Haupt-Lichtfeld und das Zusatz-Lichtfeld gemäß der zweiten Ausgestaltung nach Figur 3;
- Figur 5: in einer schematischen Darstellung eine dritte Ausgestaltung der erfindungsgemäßen Beleuchtungsvorrichtung, wobei die optische Mittelachse senkrecht auf der Zeichenebene steht.

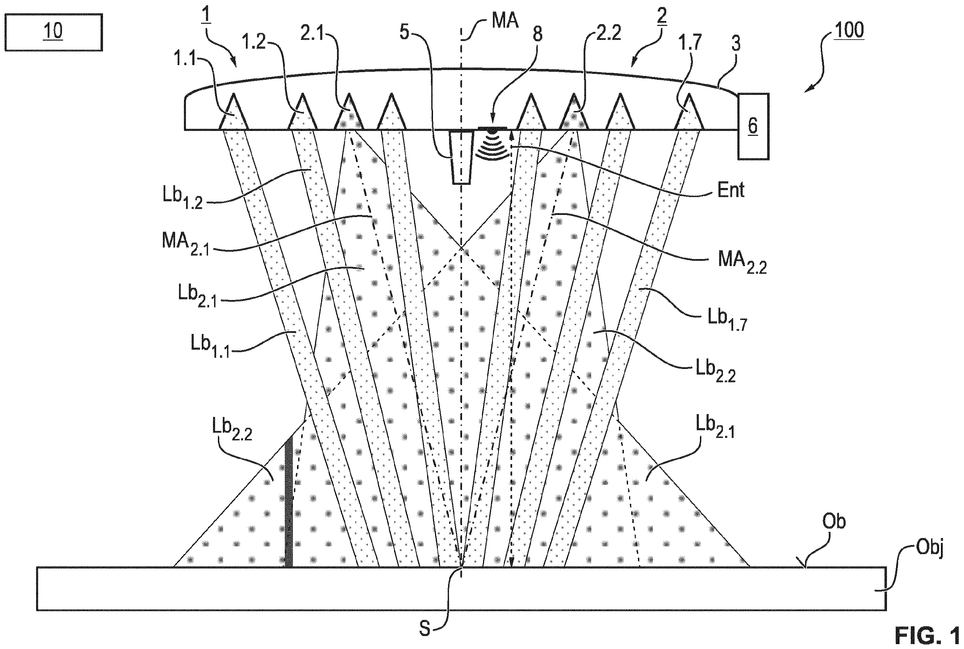

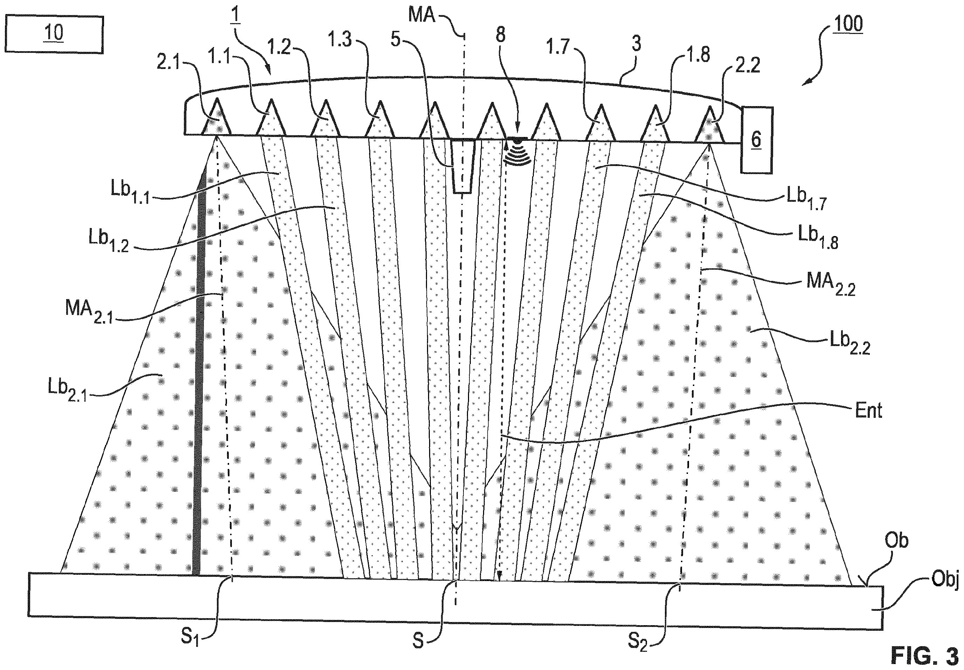

Im Ausführungsbeispiel wird eine erfindungsgemäße Beleuchtungsvorrichtung 100 verwendet, um ein Objekt Obj, hier einen medizinischen Operationstisch, zu beleuchten, vgl. Figur 1 und Figur 3. Auf diesem Operationstisch Obj liegt ein nicht gezeigter Patient, der medizinisch behandelt wird. Eine Oberfläche Ob des beleuchteten Objekts Obj zeigt zur Beleuchtungsvorrichtung 100 hin und wird daher beleuchtet. Wenn ein Patient auf dem Operationstisch Obj liegt, wird wenigstens ein Teil der zur Beleuchtungsvorrichtung 100 hin zeigenden Oberfläche des Patienten beleuchtet. Zur Vereinfachung wird in den Figuren eine ebene beleuchtete Oberfläche Ob gezeigt.

Die Beleuchtungsvorrichtung 100 umfasst einen Träger 3, der bevorzugt rotationssymmetrisch zu einer optischen Mittelachse MA der Beleuchtungsvorrichtung 100 ist. Der Träger 3 ist mittels einer nicht gezeigten Trageeinheit beweglich an einer Decke befestigt. Am Träger 3 ist mittig ein Handgriff 5 befestigt, der zur beleuchteten Oberfläche Ob hin zeigt.

Außerdem ist am Träger 3 ein optionaler Abstandssensor 8 montiert, der den Abstand zwischen sich selbst und der beleuchteten Oberfläche Ob misst. Beispielsweise strahlt der Abstandssensor 8 elektromagnetische Wellen oder Schallwellen ab, die von der Oberfläche Ob reflektiert werden und wieder den Abstandssensor 8 erreichen, und der Abstandssensor 8 misst die Laufzeit. Der seitliche Versatz zwischen dem Abstandssensor 8 und der optischen Mittelachse MA sowie die Messrichtung des Abstandssensors 8 relativ zur optischen Mittelachse MA sind durch die Konstruktion der Beleuchtungsvorrichtung 100 bekannt. Ein nur schematisch gezeigtes signalverarbeitendes Steuergerät (control unit) 10 leitet den gesuchten Abstand Ent zwischen dem Träger 3 und der Oberfläche Ob aus den Messergebnissen des Abstandssensors 8 und dem konstruktionsbedingten seitlichen Versatz und dem Winkel her. Im Ausführungsbeispiel wird mit ausreichender Genauigkeit davon ausgegangen, dass die optische Mittelachse MA senkrecht auf der ebenen beleuchteten Oberfläche Ob steht.

Figur 1 und Figur 3 zeigen schematisch zwei Ausgestaltungen der Beleuchtungsvorrichtung 100. Die optische Mittelachse MA liegt in den Zeichenebenen von Figur 1 und Figur 3, und die beleuchtete Oberfläche Ob des Operationstischs Obj steht senkrecht auf diesen Zeichenebenen. Die Mittelachse MA schneidet die Oberfläche Ob in einem Schnittpunkt S. Dieser Schnittpunkt S wird nachfolgend als der "Haupt-Schnittpunkt" bezeichnet.

Die Beleuchtungsvorrichtung 100 umfasst eine Vielzahl von einzelnen Lichtquellen, die nachfolgend näher beschrieben werden.

Die Beleuchtungsvorrichtung 100 umfasst eine Haupt-Beleuchtungseinheit 1 mit einer ersten Menge von Lichtquellen. Die Lichtquellen der Haupt-Beleuchtungseinheit 1 sind bevorzugt rotationssymmetrisch um die Mittelachse MA herum angeordnet und werden als Haupt-Lichtquellen bezeichnet. Möglich ist auch, dass die Haupt-Lichtquellen nicht rotationssymmetrisch angeordnet sind.

In Figur 1 und Figur 3 werden beispielhaft sieben Haupt-Lichtquellen 1.1, 1.2, ..., 1.7 der Haupt-Beleuchtungseinheit 1 gezeigt. Die Figuren sind nicht notwendigerweise maßstabsgerecht. Außerdem werden beispielhaft die sieben Lichtbündel Lb_{1.1}, ..., Lf_{1.7} dieser sieben Haupt-Lichtquellen 1.1, 1.2, ..., 1.7 gezeigt. Jede Haupt-Lichtquelle 1.1, 1.2, ..., 1.7 strahlt Licht in einem relativ schmalen Lichtbündel Lb_{1.1}, ..., Lb_{1.7} ab, also mit einem relativ kleinen Lichtdivergenzwinkel. Die Überlagerung der Lichtbündel Lb_{1.1}, ..., Lb_{1.7} liefert die Beleuchtung durch die Haupt-Beleuchtungseinheit 1.

Anmerkung: In Figur 1 und Figur 3 überlappen sich die Lichtbündel Lb_{1.1}, ..., Lb_{1.7} nicht. Möglich ist auch, dass die Lichtbündel Lb_{1.1}, ..., Lb_{1.7} sich überlappen, bevorzugt mit mindestens der Hälfte der Ausdehnung des jeweiligen Lichtfelds, oder sogar alle Haupt-Lichtquellen 1.1, 1.2, ..., 1.7 denselben Bereich auf der Oberfläche Ob beleuchten.

Die Lichtquellen der Beleuchtungsvorrichtung 100 erzeugen auf einer beleuchteten Oberfläche Ob, die senkrecht oder schräg auf der Mittelachse MA steht, ein Gesamt-Lichtfeld. Dieses Gesamt-Lichtfeld hat einen Mittelpunkt, nämlich den Haupt-Schnittpunkt S, also den Schnittpunkt der optischen Mittelachse MA mit der beleuchteten Oberfläche Ob.

In einer Ausgestaltung hat das Gesamt-Lichtfeld auf der Oberfläche Ob einen Bereich mit maximaler Beleuchtungsstärke um einen Mittelpunkt des Gesamt-Lichtfelds herum, bevorzugt um den Haupt-Schnittpunkt S herum. Nach außen, also mit wachsender Entfernung von diesem Bereich maximaler Beleuchtungsstärke, nimmt die Beleuchtungsstärke ab, beispielsweise ähnlich einer dreidimensionalen Glockenkurve, die rotationssymmetrisch zur optischen Mittelachse MA ist. Bevorzugt hat das Lichtfeld, welches die Haupt-Beleuchtungseinheit 1 auf der Oberfläche Ob erzeugt, eine derartige Form. Möglich ist auch, dass das Lichtfeld einer nachfolgend näher beschriebenen Zusatz-Beleuchtungseinheit 2 ebenfalls eine derartige Form hat. Möglich ist aber auch, dass die Zusatz-Beleuchtungseinheit 2 die maximale Beleuchtungsstärke auf mehreren Punkten einer geschlossenen Kurve, insbesondere eines Kreises oder einer sonstigen Ellipse, um den Haupt-Schnittpunkt S herum erzielt, und die Beleuchtungsstärke im Inneren der geschlossenen Kurve, also zum Haupt-Schnittpunkt S hin wieder abnimmt.

Bevorzugt umfasst die Beleuchtungsrichtung 100 eine schematisch gezeugte Erfassungseinrichtung 6, die verschiedene Benutzervorgaben zu erfassen vermag. Die Erfassungseinrichtung 6 ist in der gezeigten Realisierungsform seitlich am Träger 3 montiert. Dank dieser Ausgestaltung kann ein Benutzer gleichzeitig die Erfassungseinrichtung 6 betätigen und auf die beleuchtete Oberfläche Ob blicken. Mithilfe dieser Erfassungseinrichtung 6 kann ein Benutzer geforderte oder gewünschte Werte für verschiedene Parameter der Beleuchtungsvorrichtung 100 eingeben.

Ein Parameter ist der zu erzielende Lichtfeld-Durchmesser dₓ. Bevorzugt bezieht sich ein vom Benutzer vorgegebener Wert auf den Parameter Lichtfeld-Durchmesser dₓ mit x = 10% und auf einen Referenzabstand von z.B. 1 m zwischen der Beleuchtungsvorrichtung 100 und der beleuchteten Oberfläche Ob. Zwei weitere Parameter sind die maximal erzielte Beleuchtungsstärke, z.B. ebenfalls im Referenzabstand oder im Raum, und das Lichtspektrum oder die korrelierte Farbtemperatur des abgestrahlten Lichts, außerdem der Kontrast. Die eingestellte maximal erzielte (genauer: zu erzielende) Beleuchtungsstärke im Referenzabstand ist kleiner oder gleich der maximal erzielbaren Beleuchtungsstärke im Referenzabstand und größer oder gleich der maximalen Beleuchtungsstärke, welche auf der Oberfläche Ob erzielt wird. Beispielsweise kann ein Benutzer durch Dimmen die maximal erzielte Beleuchtungsstärke reduzieren oder durch Aufdrehen vergrößern. In der Regel gibt der Benutzer nicht direkt jeweils einen Wert für diese Parameter vor, sondern einen Wert auf einer stufenlosen oder gestuften Skala von beispielsweise 1 bis 10.

In einer Ausgestaltung beziehen sich die Parameter, für die der Benutzer Werte vorgeben kann, auf die Beleuchtungsvorrichtung 100 und wirken auf die Haupt-Beleuchtungseinheit 1. Welche Auswirkungen eine Benutzervorgabe auf die Zusatz-Beleuchtungseinheit 2 hat, wird weiter unten beschrieben. Möglich ist auch, dass mindestens ein Parameter auf die gesamte Beleuchtungsvorrichtung 100 wirkt.

Im gezeigten Beispiel beleuchten die Haupt-Lichtquellen 1.1, 1.2, ..., 1.7 der Haupt-Beleuchtungseinheit 1 einen relativ kleinen Bereich auf der beleuchteten Oberfläche Ob. Bevorzugt gilt: 2*d₅₀ > d₁₀.

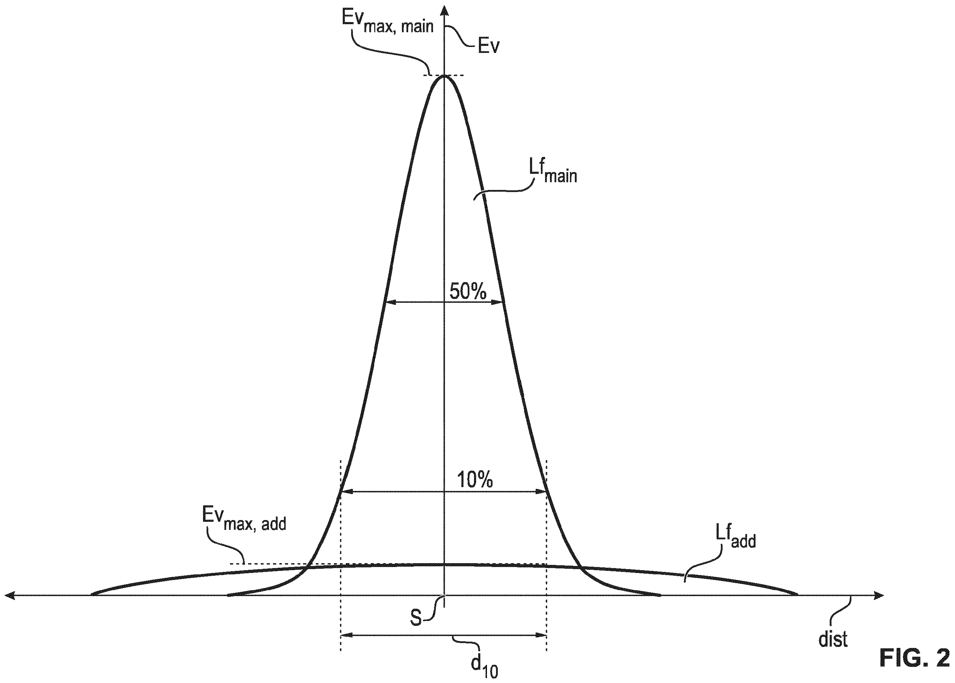

Figur 2 zeigt schematisch ein Diagramm, welches die beiden Lichtfelder zeigt, die von den beiden Beleuchtungseinheiten 1 und 2 von Figur 1 erzeugt werden, wobei auf der x-Achse der Abstand dist zwischen dem Haupt-Schnittpunkt S der Mittelachse MA mit der beleuchteten Oberfläche Ob einerseits und einem Punkt auf der beleuchteten Oberfläche Ob andererseits aufgetragen ist. Auf der y-Achse ist ein Maß für die erzeugte Beleuchtungsstärke Ev auf der Oberfläche Ob aufgetragen. Diese Beleuchtungsstärke Ev hat die Form einer rotationssymmetrischen Glockenkurve um den Haupt-Schnittpunkt S herum. Im Haupt-Schnittpunkt S erzeugt die Haupt-Beleuchtungseinheit 1 die maximale Beleuchtungsstärke Ev_{max,main}. Die Glockenkurve, die das Lichtfeld der Haupt-Beleuchtungseinheit 1 beschreibt, wird mit Lfₘₐᵢₙ bezeichnet. Eingetragen ist der Lichtfeld-Durchmesser d₁₀ des Lichtfelds Lfₘₐᵢₙ. Bei der Beleuchtungsvorrichtung 100, die einen Operationstisch Obj beleuchtet, liegt der Lichtfeld-Durchmesser d₁₀ bevorzugt zwischen 13 cm und 35 cm. Außerdem ist der Lichtfeld-Durchmesser d₅₀ eingetragen, also der Durchmesser des Kreises um S mit x = 50% der maximalen Beleuchtungsstärke. Bevorzugt ist d₅₀ mindestens halb so groß wie d₁₀. Besonders bevorzugt erfüllt die Haupt-Beleuchtungseinheit 1 die Norm IEC 60601-2-41 für Operationsleuchten, in der festgelegt ist, dass das Lichtfeld relativ klein und relativ scharf begrenzt ist - konkret: dass 2*d₅₀ > d₁₀ gilt.

Einerseits wird oft gefordert oder wenigstens gewünscht, das von der Beleuchtungsvorrichtung 100 abgestrahlte Licht besonders gut auf einen bestimmten Bereich zu bündeln. Dadurch wird nur der Bereich beleuchtet, in dem eine medizinische Behandlung stattfinden soll. Außerdem spart eine starke Bündelung in vielen Fällen verbrauchte elektrische Energie und erzeugte Strahlungsenergie ein. Ein sehr hoher Kontrast zwischen einem beleuchteten und einem nicht beleuchteten Bereich kann andererseits dazu führen, dass die Augen eines behandelnden Arztes rasch ermüden, wenn die Augen zwischen einem stark und einem weniger stark beleuchteten Bereich hin und her wandern. Möglich ist sogar, dass die Augen geblendet werden und dadurch schmerzen.

Ein zu hoher Kontrast kann auch dazu führen, dass Bereiche des Patienten auf dem Operationstisch nicht deutlich genug in Bildern einer Kamera zu sehen sind, wobei diese Kamera auf den Operationstisch gerichtet ist und die Bilder auf einer Ausgabeeinheit dargestellt werden. Eine derartige Anordnung wird beispielsweise eingesetzt, um Medizinstudenten auszubilden. Zwar hat eine solche Kamera häufig eine automatische Helligkeitseinstellung. Diese automatische Helligkeitseinstellung kann aber oft einem großen Kontrast nicht vollständig folgen. Daher vermögen manche Kameras nicht, ein kontrastreiches Bild korrekt zu erfassen. Entweder ist der unbeleuchtete Randbereich zu dunkel oder die Mitte zu hell.

Als Kontrast Kon, den die Beleuchtungsvorrichtung 100 erzielt, lässt sich das Verhältnis zwischen der maximalen Beleuchtungsstärke Evₘₐₓ auf der beleuchteten Oberfläche Ob und der mittleren Beleuchtungsstärke auf dem Kreis mit dem Durchmesser x*d₁₀ bezeichnen, also Kon = Evₘₐₓ / Ex(x*d₁₀) mit x > 1. Im Ausführungsbeispiel wird x = 2 verwendet, d.h. der Kontrast ist Kon = Evₘₐₓ / Ex(2*d₁₀). Der Kontrast Kon liegt bei herkömmlichen Beleuchtungsvorrichtungen oft zwischen 50 und 400. Auch das Lichtfeld Lfₘₐᵢₙ, das die Haupt-Beleuchtungseinheit 1 der erfindungsgemäßen Beleuchtungsvorrichtung 100 erzielt, weist bevorzugt einen solchen großen Kontrast Kon auf. In einer Ausgestaltung ist der Kontrast Kon ein weiterer Parameter der erfindungsgemäßen Beleuchtungsvorrichtung 100. Dieser Parameter Kon lässt sich unabhängig vom Lichtfeld-Durchmesser dₓ verändern.

In der Regel ist ein hoher Kontrast Kon gewünscht. Manchmal soll der Kontrast Kon aber wenigstens zeitweise verringert werden. Insbesondere deshalb umfasst die Beleuchtungsvorrichtung 100 zusätzlich zur Haupt-Beleuchtungseinheit 1 eine Zusatz-Beleuchtungseinheit 2, die mindestens eine Zusatz-Lichtquelle, bevorzugt mehrere Zusatz-Lichtquellen umfasst. Auch die Zusatz-Lichtquellen sind im Träger 3 montiert. Die Positionen und Orientierungen der Zusatz-Lichtquellen lassen sich im Ausführungsbeispiel nicht relativ zu den Positionen und Orientierungen der Haupt-Lichtquellen verändern. In Figur 1 und Figur 3 werden beispielhaft zwei Zusatz-Lichtquellen 2.1 und 2.2 gezeigt. Die Zusatz-Beleuchtungseinheit 2 lässt sich bevorzugt unabhängig von der Haupt-Beleuchtungseinheit 1 einschalten und ausschalten. In einer Ausgestaltung kann ein Benutzer die Zusatz-Beleuchtungseinheit 2 einschalten und ausschalten, in einer anderen Ausgestaltung kann dies das Steuergerät 10 automatisch. Möglich ist, dass sowohl ein Benutzer als auch das Steuergerät 10 die Zusatz-Beleuchtungseinheit 2 einschalten und ausschalten kann.

Figur 2 zeigt beispielhaft die Beleuchtungsstärke Ev, die die Zusatz-Beleuchtungseinheit 2 auf der beleuchteten Oberfläche Ob erzielt. Auf der x-Achse ist der Abstand zwischen einem Punkt auf der Oberfläche Ob und dem Haupt-Schnittpunkt S aufgetragen, auf der y-Achse die jeweilige Beleuchtungsstärke in diesem Punkt. Im Haupt-Schnittpunkt S erzielt die Zusatz-Beleuchtungseinheit 2 in der Ausgestaltung gemäß Figur 1 die maximale Beleuchtungsstärke Ev_{max,add}. Gezeigt wird die Kurve Lf_{add} für das Lichtfeld Lf_{add} von der Zusatz-Beleuchtungseinheit 2. Zu sehen ist, dass die Zusatz-Beleuchtungseinheit 2 einen größeren Bereich der Oberfläche Ob als die Haupt-Beleuchtungseinheit 1 beleuchtet, und dies in einem zentralen Bereich mit einer geringeren Beleuchtungsstärke. Genauer gesagt: Jeder Lichtfeld-Durchmesser dₓ der Haupt-Beleuchtungseinheit 1 liegt im gezeigten Beispiel konzentrisch im entsprechenden Lichtfeld-Durchmesser dₓ der Zusatz-Beleuchtungseinheit 2.

Jede Zusatz-Lichtquelle 2.1, 2.2 strahlt Licht mit einem relativ breiten kegelförmigen Lichtbündel Lb₂₁, Lb₂₂ ab, vgl. Figur 1 und Figur 3. Das Lichtbündel Lb₂₁, Lb₂₂ ist rotationssymmetrisch zu einer Mittelachse MA_{2.1} bzw. MA_{2.2}. Bei der Ausgestaltung gemäß Figur 1 schneiden die Mittelachsen MA, MA_{2.1} und MA_{2.2} der Haupt-Beleuchtungseinheit 1 und der Zusatz-Lichtquellen 2.1 und 2.2 die beleuchtete Oberfläche Ob in demselben Haupt-Schnittpunkt S. Bei der Ausgestaltung gemäß Figur 3 schneiden die Mittelachsen MA, MA_{2.1} und MA_{2.2} die beleuchtete Oberfläche Ob hingegen in drei voneinander beabstandeten Schnittpunkten S, S₁ bzw. S₂. Die beiden Schnittpunkte S₁ und S₂ werden als "Zusatz-Schnittpunkte" bezeichnet. Die beiden Zusatz-Lichtquellen 2.1 und 2.2 erzeugen ihre maximale Beleuchtungsstärke in den Zusatz-Schnittpunkten S₁ bzw. S₂. Diese übereinstimmende maximale Beleuchtungsstärke ist gleich der maximalen Beleuchtungsstärke Ev_{ma,add} der Zusatz-Beleuchtungseinheit 2 und liegt zwischen 1 % und 15 %, bevorzugt zwischen 2 % und 5 %, der maximalen Beleuchtungsstärke Ev_{max,main} der Haupt-Beleuchtungseinheit 1. Der Abstand zwischen zwei verschiedenen Zusatz-Schnittpunkten S₁, S₂ kann größer oder kleiner als der Abstand zwischen der Beleuchtungsvorrichtung 100 und der beleuchteten Oberfläche Ob sein. Die maximale Beleuchtungsstärke Ev_{ma,add} des Lichtfelds, das die Zusatz-Beleuchtungseinheit 2 gemäß Figur 3 auf der beleuchteten Oberfläche Ob erzielt, tritt in einem Kreisring um den Haupt-Schnittpunkt S herum auf, wobei die beiden Zusatz-Schnittpunkte S₁ und S₂ auf diesem Kreisring liegen. In einer Ausgestaltung liegen die beiden Zusatz-Schnittpunkte S₁ und S₂ auf dem Lichtfeld-Durchmesser d₁₀ der Haupt-Beleuchtungseinheit 1. Falls die Beleuchtungsvorrichtung 100 die Oberfläche Ob schräg von oben beleuchtet, so bilden die Zusatz-Schnittpunkte bevorzugt eine Ellipse.

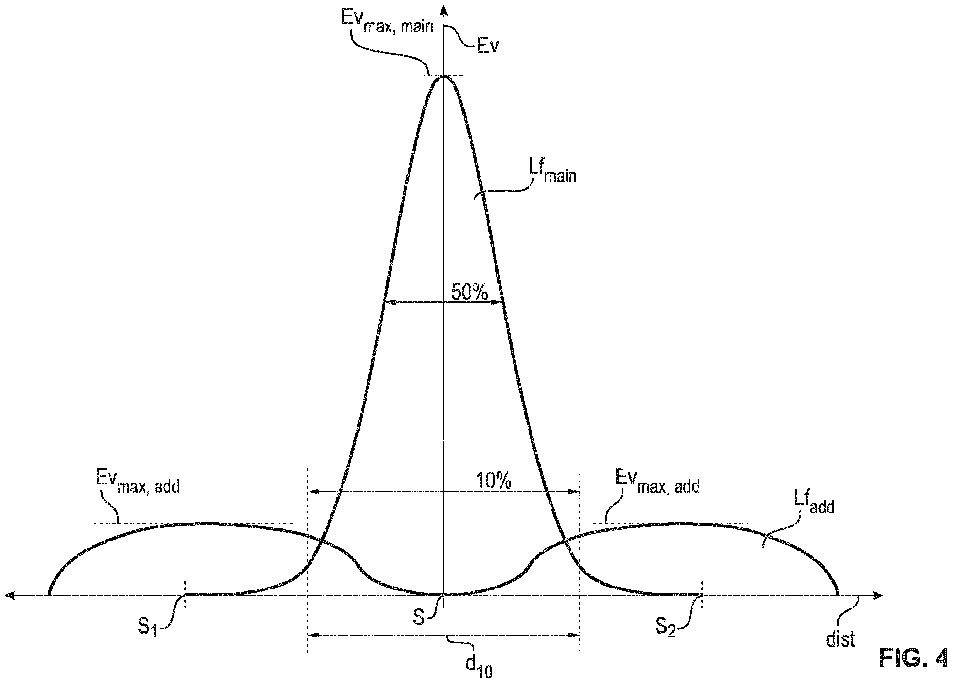

Figur 4 zeigt schematisch, welches Lichtfeld Lf_{add} die Zusatz-Beleuchtungseinheit 2 bei der Ausgestaltung gemäß Figur 3 auf der Oberfläche Ob erzeugt. Das Lichtfeld Lfₘₐᵢₙ der Haupt-Beleuchtungseinheit 1 ist das gleiche wie bei der Ausgestaltung gemäß Figur 1. In Figur 4 sind die beiden Zusatz-Schnittpunkte S₁ und S₂ eingetragen.

Möglich ist auch, dass die beiden Mittelachsen MA_{2.1} und MA_{2.2} der Zusatz-Lichtquellen 2.1 und 2.2 sich nicht schneiden und / oder nicht die Mittelachse MA der Haupt-Beleuchtungseinheit 1 schneiden, sondern zwei Mittelachsen windschief zueinander sind.

In Figur 2 und Figur 4 ist zu sehen, dass die maximale Beleuchtungsstärke Ev_{ma,add} der Zusatz-Beleuchtungseinheit 2 erheblich kleiner ist als die maximale Beleuchtungsstärke Ev_{max,main} der Haupt-Beleuchtungseinheit 1. Bevorzugt liegt die maximale Beleuchtungsstärke Ev_{ma,add} der Zusatz-Beleuchtungseinheit 2 zwischen 1 % und 15 %, bevorzugt zwischen 2 % und 5 %, der maximalen Beleuchtungsstärke Ev_{max,main} der Haupt-Beleuchtungseinheit 1. Aufgrund dieses Merkmals verändert die Zusatz-Beleuchtungseinheit 2 den Lichtfeld-Durchmesser dₓ nicht wesentlich, d.h. der Lichtfeld-Durchmesser dₓ der Beleuchtungsvorrichtung 100 verändert sich nicht in einer wahrnehmbaren Weise, wenn die Zusatz-Beleuchtungseinheit 2 eingeschaltet oder ausgeschaltet wird.

Bei eingeschalteter Zusatz-Beleuchtungseinheit 2 ist der Kontrast Kon, den die Beleuchtungsvorrichtung 100 erzielt und der bevorzugt so wie oben beschrieben definiert ist, kleiner als bei ausgeschalteter Zusatz-Beleuchtungseinheit 2, bevorzugt mindestens um den Faktor 1,5, besonders bevorzugt mindestens um den Faktor 10. Insbesondere durch folgende konstruktionsbedingte Parameter der Zusatz-Beleuchtungseinheit 2 lässt sich der erzielte Kontrast der Beleuchtungsvorrichtung 100 bei eingeschalteter Zusatz-Beleuchtungseinheit 2 beeinflussen:
- den Divergenzwinkel und damit der Lichtfeld-Durchmesser dₓ,
- die Ausrichtung relativ zur Haupt-Beleuchtungseinheit 1 und
- die maximale Beleuchtungsstärke.

Die Haupt-Beleuchtungseinheit 1 und die Zusatz-Beleuchtungseinheit 2 lassen sich bevorzugt unabhängig voneinander einschalten und ausschalten. Möglich ist, die Haupt-Beleuchtungseinheit 1 auszuschalten und nur die Zusatz-Beleuchtungseinheit 2 zu verwenden. Die Beleuchtung nur durch die Zusatz-Beleuchtungseinheit 2 lässt sich beispielsweise dafür verwenden, um einen Raum zu beleuchten, wenn aktuell keine Operation durchgeführt wird, um eine Arbeit mit einem Endoskop durchzuführen oder um eine Operation vorzubereiten oder nachzubereiten.

Wie bereits dargelegt, kann ein Benutzer einen Wert für die maximale Beleuchtungsstärke der Haupt-Beleuchtungseinheit 1 vorgegeben, beispielsweise als Prozentsatz der maximal möglichen Beleuchtungsstärke. Aus dieser Benutzervorgabe resultiert ein Wert für die erzielte maximale Beleuchtungsstärke Ev_{max,main}. In einer Ausgestaltung kann der Benutzer außerdem einen Wert für die maximale Beleuchtungsstärke Ev_{ma,add} der Zusatz-Beleuchtungseinheit 2 vorgegeben, beispielsweise als Prozentsatz der maximal möglichen Beleuchtungsstärke der Zusatz-Beleuchtungseinheit 2. Aus dieser Benutzervorgabe resultiert ein Wert für die erzielte maximale Beleuchtungsstärke Ev_{max,add}. Beispielsweise ist ein Standardwert für den Beleuchtungsstärken-Quotient, das ist der Quotient zwischen der maximalen Zusatz-Beleuchtungsstärke und der maximalen Haupt-Beleuchtungsstärke abgespeichert, und der Benutzer kann diesen Standardwert verwenden oder verändern. Der Standardwert für den Beleuchtungsstärken-Quotienten ist bevorzugt kleiner als 10 %, besonders bevorzugt kleiner als 5 %.

Das Steuergerät (10 der Beleuchtungsvorrichtung 100 empfängt die vorgegebenen Werte für die Parameter der Beleuchtungsvorrichtung 100 und stellt automatisch die Zusatz-Beleuchtungseinheit 2 so ein, dass der Quotient Zusatz-Beleuchtungsstärke zu Haupt-Beleuchtungsstärke stets gleich dem vorgegebenen Wert ist. Insbesondere bewirkt das Steuergerät 10, dass die maximale Beleuchtungsstärke der Zusatz-Beleuchtungseinheit 2 verändert wird, wenn ein Benutzer einen anderen Wert für die maximale Beleuchtungsstärke der Haupt-Beleuchtungseinheit 1 vorgibt. In einer Realisierungsform vermag das Steuergerät 10 die elektrische Spannung, die an den Zusatz-Lichtquellen 2.1, 2.2 anliegt, oder die Stärke des durch die Zusatz-Lichtquellen 2.1, 2.2 fließenden Stroms zu verändern. In einer bevorzugten Realisierungsform vermag das Steuergerät 10 eine Pulsweitenmodulation durchzuführen oder eine Pulsweite oder eine Pulsfrequenz einer anliegenden gepulsten Spannung zu verändern. Beide Maßnahmen bewirken, dass die tatsächliche Beleuchtungsstärke einer Zusatz-Lichtquelle 2.1, 2.2 in gesteuerter Weise verändert wird. Möglich ist auch, dass nur die jeweilige Lichtstärke einiger Zusatz-Lichtquellen verändert wird, aber nicht die alle Zusatz-Lichtquellen.

Wie bereits dargelegt, kann ein Benutzer einen Wert für die maximale Beleuchtungsstärke im Referenzabstand der Haupt-Beleuchtungseinheit 1 vorgeben, beispielsweise indem er die Beleuchtungsstärke schrittweise vergrößert oder verkleinert. Außerdem kann ein Benutzer die Zusatz-Beleuchtungseinheit 2 einschalten und ausschalten. In einer Ausgestaltung wird der vorgegebene Wert für die maximale Beleuchtungsstärke Ev_{max,main} der Haupt-Beleuchtungseinheit 1 als obere Schranke für die maximale Beleuchtungsstärke der gesamten Beleuchtungsvorrichtung 100 verwendet. Falls anfangs die Zusatz-Beleuchtungseinheit 2 ausgeschaltet ist und später der Benutzer die Zusatz-Beleuchtungseinheit 2 einschaltet, so bewirkt bevorzugt das Steuergerät 10, dass die maximale Beleuchtungsstärke und damit die maximale Beleuchtungsstärke Ev_{max,main} der Haupt-Beleuchtungseinheit 1 reduziert wird, und zwar so, dass die Summe Ev_{max,main} + Ev_{ma,add} der beiden maximalen Beleuchtungsstärken gleich dem vom Benutzer vorgegebenen Wert ist.

Bevorzugt erzielt die Zusatz-Beleuchtungseinheit 2 das gleiche Lichtspektrum und daher die gleiche korrelierte Farbtemperatur wie die Haupt-Beleuchtungseinheit 1. In einer Ausgestaltung kann ein Benutzer das Lichtspektrum der Haupt-Beleuchtungseinheit 1 einstellen und verändern. Das Steuergerät 10 steuert die Zusatz-Lichtquellen 2.1, 2.2 automatisch so an, dass die eingeschaltete Zusatz-Beleuchtungseinheit 2 stets das gleiche Lichtspektrum wie die Haupt-Beleuchtungseinheit 1 erzielt.

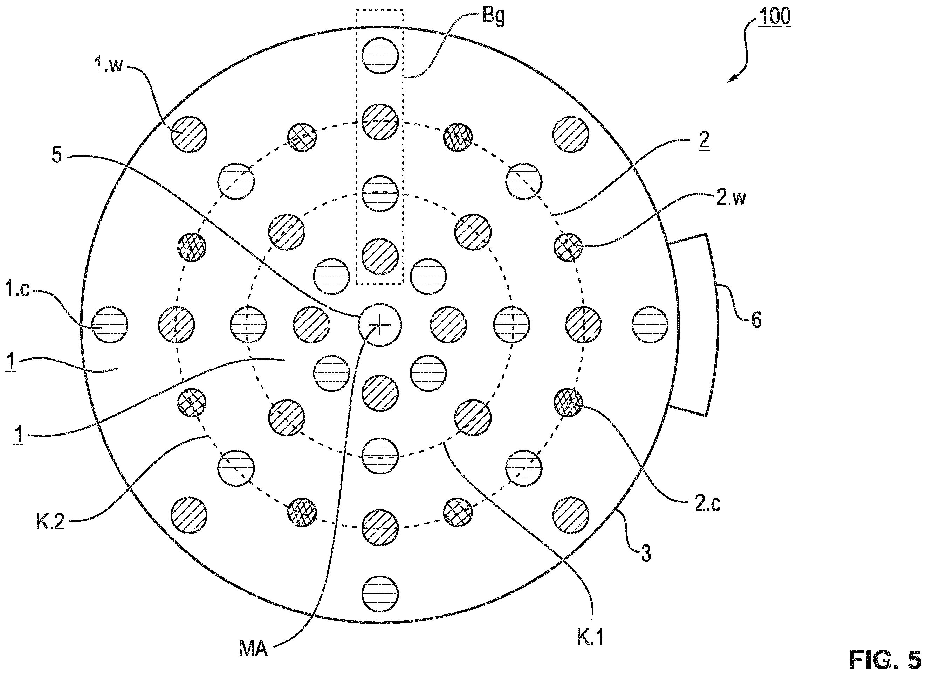

In einer Realisierungsform lassen sich die Zusatz-Lichtquellen 2.1, 2.2 nur gemeinsam einschalten und ausschalten. Alternative Realisierungsformen werden weiter unten mit Bezug auf Figur 5 beschrieben. Das Lichtspektrum der Zusatz-Beleuchtungseinheit 2 wird aus den Lichtspektren der Zusatz-Lichtquellen 2.1, 2.2 gemischt. In der Regel wird das Lichtspektrum der Beleuchtungsvorrichtung 100 aus den Lichtspektren der Haupt-Lichtquellen 1.1, 1.2, ... und den Lichtspektren der Zusatz-Lichtquellen 2.1, 2.2 gemischt. In einem zentralen Bereich um die Mittelachse MA herum wird das Lichtspektrum, welche die Beleuchtungsvorrichtung 100 erzielt, fast ausschließlich von den Lichtspektren der Haupt-Lichtquellen 1.1, 1.2, ... festgelegt, in einem Bereich um diesen zentralen Bereich herum überwiegend von den Lichtspektren der Zusatz-Lichtquellen 2.1, 2.2. In einer Realisierungsform unterscheiden sich die Lichtspektren der Zusatz-Lichtquellen 2.1, 2.2 nur so wenig von den Lichtspektren der Haupt-Lichtquellen 1.1, 1.2, ..., dass der Verlauf des Lichtspektrums über den gesamten beleuchteten Bereich hinweg annähernd konstant ist. Bevorzugt unterscheiden sich die korrelierten Farbtemperaturen um höchstens 500 Kelvin voneinander. In einer anderen Realisierungsform strahlen die Zusatz-Lichtquellen 2.1, 2.2 wärmeres Licht als die Haupt-Lichtquellen 1.1, 1.2, ... ab, was in vielen Fällen augenschonender ist.

In einer Realisierungsform umfasst die Haupt-Beleuchtungseinheit 1 zwei Arten von Haupt-Lichtquellen. Die Haupt-Lichtquellen einer ersten Art vermögen warmweißes Licht abzustrahlen und haben beispielsweise die Parameter 2.700 Kelvin Farbtemperatur und 400 mA maximale Stromstärke. Die Haupt-Lichtquellen einer zweiten Art vermögen kaltweißes Licht abzustrahlen und haben die Parameter 6.500 Kelvin Farbtemperatur und 600 mA maximale Stromstärke. In einer Realisierungsform lassen sich die Stärke des Stroms, der durch die Haupt-Lichtquellen der ersten Art fließt, und die Stärke des Stroms, der durch die Haupt-Lichtquellen der zweiten Art fließt, unabhängig voneinander verändern. In einer bevorzugten Realisierungsform lässt sich eine Pulsweitenmodulation durchführen und / oder die jeweilige Pulsweite und / oder Pulsfrequenz des Stroms verändern, und zwar idealerweise für die Haupt-Lichtquellen der ersten Art und der zweiten Art unabhängig voneinander. In einer anderen Realisierungsform lassen sich die elektrische Spannung, die an den Haupt-Lichtquellen der ersten Art anliegt, und die elektrische Spannung, die an den Haupt-Lichtquellen der zweiten Art anliegt, unabhängig voneinander verändern. Um das Lichtspektrum der Haupt-Beleuchtungseinheit 1 an ein gewünschtes Lichtspektrum anzupassen, verändert das Steuergerät die Spannung, die an den Haupt-Lichtquellen der ersten Art anliegt, und / oder die Spannung, die an den Haupt-Lichtquellen der zweiten Art anliegt. Oder das Steuergerät verändert die Stromstärke oder Pulsweite der Haupt-Lichtquellen der ersten Art und / oder der zweiten Art. Die Zusatz-Lichtquellen haben beispielsweise ebenfalls die Parameter 2.700 Kelvin / 6.500 Kelvin und 400 mA / 600 mA oder aber andere Parameter als die Haupt-Lichtquellen.

Figur 5 zeigt in einer beispielhaften schematischen Darstellung eine dritte Ausgestaltung der erfindungsgemäßen Beleuchtungsvorrichtung 100. Die Mittelachse MA steht senkrecht auf der Zeichenebene, und ein Betrachter blickt entlang der Mittelachse MA auf die Lichtquellen und den Träger 3. Ein Patient auf dem Operationstisch Obj sieht die Beleuchtungsvorrichtung 100 etwa so wie in Figur 5 gezeigt. Diejenigen Haupt-Lichtquellen, die warmweißes Licht abstrahlen, sind mit 1.w bezeichnet, und diejenigen Haupt-Lichtquellen, die kaltweißes Licht abstrahlen, sind mit 1.c bezeichnet. Diejenigen Zusatz-Lichtquellen, die warmweißes Licht abstrahlen, sind mit 2.w bezeichnet, und diejenigen Zusatz-Lichtquellen, die kaltweißes Licht abstrahlen, sind mit 2.c bezeichnet. In der schematischen Darstellung sind die Zusatz-Lichtquellen kleiner und mit einer größeren Schraffur dargestellt als die Haupt-Lichtquellen. Die Richtung der Schraffuren unterscheidet die Lichtquellen mit warmweißen Licht von den Lichtquellen mit kaltweißem Licht. Außerdem ist in einer Ausgestaltung in der Mitte des Trägers 3 ein schematisch gezeigter Handgriff 5 angeordnet, der zum Betrachter hin zeigt.

Im gezeigten Beispiel sind die Haupt-Lichtquellen in mehreren konzentrischen Kreisen K.1, K.2 um den Handgriff 5 herum angeordnet, wobei jeder Kreis jeweils mehrere warmweiße und mehrere kaltweiße Haupt-Lichtquellen 1.w, 1.c umfasst, und zwar abwechselnd eine warmweiße und eine kaltweiße Haupt-Lichtquelle. Die Zusatz-Lichtquellen 2.w, 2.c sind in einem Kreis K.2 um den Handgriff 5 herum angeordnet, und zwar immer abwechselnd eine warmweiße und eine kaltweiße Zusatz-Lichtquelle. Die Haupt-Lichtquellen sind auf acht Baugruppen aufgeteilt, darunter die beispielhaft gezeigte Baugruppe Bg. Jede Baugruppe besteht aus jeweils vier Haupt-Lichtquellen, nämlich abwechselnd zwei kaltweißen und zwei warmweißen, die in einer Reihe angeordnet sind, wobei die acht Baugruppen strahlenförmig von der optischen Mittelachse MA ausgehen.

Die Haupt-Lichtquellen sind auf mehrere Lichtquellen-Gruppen aufgeteilt, wobei sich jede Lichtquellen-Gruppe unabhängig von jeder anderen Lichtquellen-Gruppe ansteuern lässt. In einer Realisierungsform bildet jede Baugruppe jeweils eine Lichtquellen-Gruppe. In einer anderen Realisierungsform bilden die kaltweißen Lichtquelle 1.c einer Baugruppe eine erste Lichtquellen-Gruppe und die warmweißen Lichtquellen 1.w derselben Baugruppe eine zweite Lichtquellen-Gruppe. Im Beispiel von Figur 5 umfasst die Haupt-Beleuchtungseinheit 1 also bei der ersten Realisierungsform acht Lichtquellen-Gruppen und bei der zweiten Realisierungsform 16 Lichtquellen-Gruppen. Möglich ist auch, dass sich jede Lichtquelle der Haupt-Beleuchtungseinheit 1 einzeln ansteuern lässt.

In einer Realisierungsform lassen sich die Lichtquellen der Zusatz-Beleuchtungseinheit 2 nur gemeinsam ansteuern, bilden also zusammen eine einzige lichtquellengruppe. In einer anderen Realisierungsform bilden die kaltweißen Lichtquellen 2.c in der Zusatz-Beleuchtungseinheit 2 eine erste Lichtquellen-Gruppe und die warmweißen Lichtquellen 2.w eine zweite Lichtquellen-Gruppe. Möglich ist auch, dass sich jede Lichtquelle der Zusatz-Beleuchtungseinheit 2 einzeln ansteuern lässt.

In einer Ausgestaltung werden die beiden Beleuchtungseinheiten 1, 2 vorab eingestellt und dadurch kalibriert. Bei der Einstellung werden insbesondere die jeweilige Helligkeit und das jeweilige Lichtspektrum der beiden Beleuchtungseinheit eingestellt. Bevorzugt wird die Einstellung so durchgeführt, dass die Zusatz-Beleuchtungseinheit 2 stets das gleiche Lichtspektrum erzielt wie die Haupt-Beleuchtungseinheit 1. Außerdem wird bevorzugt die Einstellung so durchgeführt, dass das Verhältnis zwischen der maximalen Beleuchtungsstärke der Zusatz-Beleuchtungseinheit 2 gleich einem vorgegebenen Prozentsatz der maximalen Beleuchtungsstärke der Haupt-Beleuchtungseinheit 1 ist. Für verschiedene mögliche Lichtspektren und maximalen Beleuchtungsstärken der Haupt-Beleuchtungseinheit 1 werden solche Einstellwerte für die Zusatz-Beleuchtungseinheit 2 hergeleitet, bei denen diese beiden Anforderungen erfüllt sind. Die Einstellwerte werden in Verbindung mit den Lichtspektren und Prozentsätzen in einer rechnerauswertbaren Tabelle abgespeichert. Das Steuergerät 10 hat wenigstens zeitweise Lesezugriff auf diese Tabelle.

In einer anderen Ausgestaltung ist in einem Datenspeicher der Beleuchtungsvorrichtung 100 eine Berechnungsvorschrift abgespeichert. Das Steuergerät wendet diese Berechnungsvorschrift auf Werte für Parameter der Beleuchtungsvorrichtung 100 an, um Einstell-Wert für die Lichtquellen herzuleiten, wobei der Benutzer dieser Parameterwerte vorgegeben hat.

**Bezugszeichenliste**

| | |
|---|---|
| 1 | Haupt-Beleuchtungseinheit, erzeugt auf der Oberfläche Ob das Haupt-Lichtfeld Lfₘₐᵢₙ mit der maximalen Beleuchtungsstärke Ev_{max,main}, umfasst die Haupt-Lichtquellen 1.1, 1.2, ... |
| 1.1, 1.2, ... | Haupt-Lichtquellen, gehören zur Haupt-Beleuchtungseinheit 1, erzeugen jeweils ein Lichtbündel Lb_{1.1}, Lb_{1.2}, ..., 1.2, ..., sind am Träger 3 befestigt |
| 1.c | Haupt-Lichtquelle, die kaltweißes Licht abstrahlt |
| 1.w | Haupt-Lichtquelle, die warmweißes Licht abstrahlt |
| 2 | Zusatz-Beleuchtungseinheit, erzeugt das Zusatz-Lichtfeld Lf_{add} mit der maximalen Beleuchtungsstärke Ev_{max,add}, umfasst die Zusatz-Lichtquellen 2.1, 2.2 |
| 2.1, 2.2 | Zusatz-Lichtquellen, gehören zur Zusatz-Beleuchtungseinheit 2, erzeugen jeweils ein Lichtbündel Lb₂₁, Lb_{2.2}, sind am Träger 3 befestigt |
| 2.c | Zusatz-Lichtquelle, die kaltweißes Licht abstrahlt |
| 2.w | Zusatz-Lichtquelle, die warmweißes Licht abstrahlt |
| 3 | Träger der Beleuchtungsvorrichtung 100, trägt die Lichtquellen 1.1, 1.2, 1.c, 1.w, ..., 2.1, 2.2, 2.c, 2.w, ... sowie den Handgriff 5, die Erfassungseinrichtung 6 und den Abstandssensor 8, ist rotationssymmetrisch zur Mittelachse MA |
| 5 | mittiger Handgriff am Träger 3 |
| 6 | Erfassungseinrichtung am Träger 3, ermöglicht die Eingabe von Benutzervorgaben |
| 8 | optionaler Abstandssensor am Träger 3, misst den Abstand Ent zwischen sich und der Oberfläche Ob |
| 10 | signalverarbeitendes Steuergerät, steuert die Lichtquellen 1.1, 1.2, 1.c, 1.w, ..., 2.1, 2.2, 2.c, 2.w, ... an |
| Bg | Baugruppe mit vier Haupt-Lichtquellen |
| dist | Entfernung eines Punkts auf der beleuchteten Oberfläche Ob vom Schnittpunkt S |
| dₓ | Durchmesser eines Kreises auf der beleuchteten Oberfläche Ob, in dem die Beleuchtungsstärke noch x % Prozent der maximalen Beleuchtungsstärke beträgt |
| Ent | Abstand zwischen der Beleuchtungsvorrichtung 100 und der beleuchteten Oberfläche Ob, vom Abstandsensor 8 gemessen |
| Ev | Beleuchtungsstärke |
| Evₘₐₓ | maximale Beleuchtungsstärke der Beleuchtungsvorrichtung 100 auf der Oberfläche Ob |
| Ev_{max,main} | maximale Beleuchtungsstärke der Haupt-Beleuchtungseinheit 1 auf der Oberfläche Ob |
| Ev_{max,add} | maximale Beleuchtungsstärke der Zusatz-Beleuchtungseinheit 2 auf der Oberfläche Ob |
| K.1 | Kreis um die optische Mittelachse MA, auf dem einige Haupt-Lichtquelle 1.w, 1.c angeordnet sind |
| K.2 | Kreis um die optische Mittelachse MA, auf dem die Zusatz-Lichtquelle 2.w, 2.c angeordnet sind |
| Lf_{add} | Zusatz-Lichtfeld, von der Zusatz-Beleuchtungseinheit 2 erzeugt |
| Lfₘₐᵢₙ | Haupt-Lichtfeld, von der Haupt-Beleuchtungseinheit 1 erzeugt |
| Lb_{1.1}, Lb_{1.2}, ... | Lichtbündel der Haupt-Lichtquellen 1.1, 1.2, ... |
| Lb_{2.1}, Lb_{2.2} | Lichtbündel der Zusatz-Lichtquellen 2.1, 2.2, ... |
| MA | optische Mittelachse der Beleuchtungsvorrichtung 100, zugleich optische Mittelachse der Haupt-Beleuchtungseinheit 1 und der Zusatz-Beleuchtungseinheit 2 |
| MA_{2.1} | Mittelachse des Lichtbündels, das die Lichtquelle 2.1 erzeugt, zugleich optische Mittelachse der Lichtquelle 2.1 |
| MA_{2.2} | Mittelachse des Lichtbündels, das die Lichtquelle 2.2 erzeugt, zugleich optische Mittelachse der Lichtquelle 2.2 |
| Ob | beleuchtete Oberfläche des Objekts Obj, 1.2, ..., hier: zur Beleuchtungsvorrichtung 100 zeigende Oberfläche des Patienten auf dem Operationstisch Obj |
| Obj | Objekt mit der beleuchteten Oberfläche Ob, hier: Operationstisch, auf dem ein Patient liegt |
| S | Schnittpunkt der optischen Mittelachse MA mit der beleuchteten Oberfläche Ob |
| S₁ | Schnittpunkt der optischen Mittelachse MA_{2.1} der Zusatz-Lichtquelle 2.1 und der beleuchteten Oberfläche Ob |
| S₂ | Schnittpunkt der optischen Mittelachse MA_{2.2} der Zusatz-Lichtquelle 2.2 und der beleuchteten Oberfläche Ob |

## Patentansprüche

1. Beleuchtungsvorrichtung (100) zur Beleuchtung einer Oberfläche (Ob), wobei die Beleuchtungsvorrichtung (100)
- eine Haupt-Beleuchtungseinheit (1) mit mindestens zwei Gruppen von Lichtquellen (1.1, 1.2, ...) und
- eine Zusatz-Beleuchtungseinheit (2) mit mindestens einer Gruppe von Lichtquellen (2.1, 2.2, ...), bevorzugt mit mindestens zwei Lichtquellen-Gruppen,
umfasst,
wobei jede Lichtquellen-Gruppe jeweils mindestens eine Lichtquelle umfasst und sich unabhängig von jeder anderen Lichtquellen-Gruppe ansteuern lässt,
wobei jede Beleuchtungseinheit (1, 2) dazu ausgestaltet ist, auf der Oberfläche (Ob) jeweils ein Lichtfeld (Lfₘₐᵢₙ, Lf_{add}) mit einer über die Oberfläche (Ob) variierenden Beleuchtungsstärke (Ev) zu erzielen,
wobei die Beleuchtungsvorrichtung (100) eine maximal erzielbare Beleuchtungsstärke aufweist,
wobei die Beleuchtungsvorrichtung (100) dazu ausgestaltet ist, eine Beleuchtungsstärken-Vorgabe zu erfassen, welche die maximale Beleuchtungsstärke festlegt, welche die Beleuchtungsvorrichtung (100) erzielen soll,
wobei die Beleuchtungsvorrichtung (100) so ausgestaltet ist, dass wenigstens dann,
wenn der Abstand (Ent) zwischen der Beleuchtungsvorrichtung (100) und der beleuchteten Oberfläche (Ob) in einem vorgegebenen Abstandsbereich, der bevorzugt der Bereich von 0,7 m bis 1,5 m ist, liegt und
wenn die gemäß der Beleuchtungsstärken-Vorgabe maximal zu erzielende Beleuchtungsstärke der Beleuchtungsvorrichtung (100) mindestens 20% der maximal erzielbaren Beleuchtungsstärke beträgt,
- die maximale Beleuchtungsstärke (Ev_{max,add}), welche die Zusatz-Beleuchtungseinheit (2) auf der Oberfläche (Ob) erzielt,
zwischen 1 % und 15 %, bevorzugt zwischen 2 % und 5 %,
der maximalen Beleuchtungsstärke (Ev_{max,main}), welche die Haupt-Beleuchtungseinheit (1) auf der Oberfläche (Ob) erzielt, beträgt und
- das dₓ-Lichtfeld (Lfₘₐᵢₙ) der Haupt-Beleuchtungseinheit (1) auf der Oberfläche (Ob) eine um mindestens 50% kleinere Fläche aufweist als das dₓ-Lichtfeld (Lf_{add}) der Zusatz-Beleuchtungseinheit (2),
wobei das dₓ-Lichtfeld einer Beleuchtungseinheit (1, 2) derjenige Bereich auf der Oberfläche (Ob) ist, in dem die Beleuchtungsstärke (Ev) wenigstens x % der maximalen Beleuchtungsstärke (Ev_{max,main}, Ev_{max,add}) beträgt.

2. Beleuchtungsvorrichtung (100) nach Anspruch 1,
**dadurch gekennzeichnet, dass**
jede Beleuchtungseinheit (1, 2) jeweils eine maximal erzielbare Beleuchtungsstärke (Ev_{max,main}, Ev_{max,add}) aufweist,
wobei die maximale Beleuchtungsstärke (Ev_{max,main}, Ev_{max,add}), welche die Beleuchtungseinheit (1, 2) erzielt, kleiner als oder gleich der maximal erzielbaren Beleuchtungsstärke ist und
wobei die maximal von der Zusatz-Beleuchtungseinheit (2) erzielbare Beleuchtungsstärke zwischen 1 % und 15 %, bevorzugt zwischen 2 % und 5 %, der maximal von der Haupt-Beleuchtungseinheit (1) erzielbaren Beleuchtungsstärke beträgt.

3. Beleuchtungsvorrichtung (100) nach einem der vorhergehenden Ansprüche, **dadurch gekennzeichnet, dass**
das dₓ-Lichtfeld (Lfₘₐᵢₙ), das die Haupt-Beleuchtungseinheit (1) auf der Oberfläche (Ob) erzielt, vollständig im dₓ-Lichtfeld (Lf_{add}) der Zusatz-Beleuchtungseinheit (2) enthalten ist,
wobei bevorzugt die Mittelpunkte beider dₓ-Lichtfelder (Lfₘₐᵢₙ, Lf_{add}) übereinstimmen.

4. Beleuchtungsvorrichtung (100) nach einem der vorhergehenden Ansprüche,
**dadurch gekennzeichnet, dass**
die Zusatz-Beleuchtungseinheit (2) unabhängig von der Haupt-Beleuchtungseinheit (1) einschaltbar und abschaltbar ist,
wobei bevorzugt die Beleuchtungsvorrichtung (100) dazu ausgestaltet ist,
- eine Benutzervorgabe zum Einschalten oder Ausschalten der Zusatz-Beleuchtungseinheit (2) zu erfassen und
- die Zusatz-Beleuchtungseinheit (2) abhängig von dieser Benutzervorgabe einzuschalten oder auszuschalten.

5. Beleuchtungsvorrichtung (100) nach einem der vorhergehenden Ansprüche,
**dadurch gekennzeichnet, dass**
die Beleuchtungsvorrichtung (100) ein signalverarbeitendes Steuergerät (10) umfasst,
wobei das Steuergerät (10) dazu ausgestaltet ist, automatisch
- die maximale Beleuchtungsstärke (Ev_{max,main}), welche die Haupt-Beleuchtungseinheit (1) auf der Oberfläche (Ob) erzeugt, und
- die maximale Beleuchtungsstärke (Ev_{max,add}), welche die Zusatz-Beleuchtungseinheit (2) auf der Oberfläche (Ob) erzeugt,
zu ermitteln,
wobei das Steuergerät (10) weiterhin dazu ausgestaltet ist, nach der Erfassung einer Beleuchtungsstärken-Vorgabe die Haupt-Beleuchtungseinheit (1) und / oder die Zusatz-Beleuchtungseinheit (2) mit dem Ziel anzusteuern,
dass der Beleuchtungsstärken-Quotient verglichen mit dem Zustand vor der Erfassung der Beleuchtungsstärken-Vorgabe unverändert bleibt,
wobei der Beleuchtungsstärken-Quotient der Quotient zwischen
- der maximalen Beleuchtungsstärke (Ev_{max,add}), die die Zusatz-Beleuchtungseinheit (2) auf der Oberfläche (Ob) erzielt, und
- der maximalen Beleuchtungsstärke (Ev_{max,main}), die die Haupt-Beleuchtungseinheit (1) auf der Oberfläche (Ob) erzielt,
ist und
wobei bevorzugt der Beleuchtungsstärken-Quotient zwischen 1 % und 15 %, besonders bevorzugt zwischen 2 % und 5 % liegt.

6. Beleuchtungsvorrichtung (100) nach Anspruch 5,
**dadurch gekennzeichnet, dass**
die Beleuchtungsvorrichtung (100) einen Abstandssensor (8) umfasst, welcher dazu ausgestaltet ist, ein Maß für den Abstand (Ent) zwischen der Beleuchtungsvorrichtung (100) und der Oberfläche (Ob) zu messen,
wobei das Steuergerät (10) dazu ausgestaltet ist, automatisch
- die maximale Beleuchtungsstärke (Ev_{max,main}), welche die Haupt-Beleuchtungseinheit (1) auf der Oberfläche (Ob) erzeugt, und
- die maximale Beleuchtungsstärke (Ev_{max,add}), welche die Zusatz-Beleuchtungseinheit (2) auf der Oberfläche (Ob) erzeugt,
abhängig von dem gemessenen Abstand (Ent) zu ermitteln,

7. Beleuchtungsvorrichtung (100) nach einem der vorhergehenden Ansprüche,
**dadurch gekennzeichnet, dass**
die Zusatz-Beleuchtungseinheit (2) wahlweise in einem ersten Zustand oder in einem zweiten Zustand betreibbar ist und
die Beleuchtungsvorrichtung (100) ein signalverarbeitendes Steuergerät (10) umfasst,
wobei die maximale Beleuchtungsstärke, die die Zusatz-Beleuchtungseinheit (2) im ersten Zustand auf der beleuchteten Oberfläche (Ob) erzielt, sich wenigstens bei einem Abstand (Ent) im Abstandsbereich von der maximalen Beleuchtungsstärke im zweiten Zustand unterscheidet,
wobei das Steuergerät (10) dazu ausgestaltet ist, automatisch
- die maximale Beleuchtungsstärke, welche die Beleuchtungsvorrichtung (100) mit der Zusatz-Beleuchtungseinheit (2) im ersten Zustand auf der Oberfläche (Ob) erzielt, zu ermitteln,
- eine Vorgabe zu erfassen, dass die Zusatz-Beleuchtungseinheit (2) vom ersten in den zweiten Zustand umgeschaltet werden soll,
- zu bewirken, dass die die Zusatz-Beleuchtungseinheit (2) vom ersten in den zweiten Zustand umgeschaltet wird, und
- die Haupt-Beleuchtungseinheit (1) anzusteuern, und
wobei das Ziel bei der Ansteuerung der Haupt-Beleuchtungseinheit (1) ist,
dass die maximale Beleuchtungsstärke, welche die Beleuchtungsvorrichtung (100) mit der Zusatz-Beleuchtungseinheit (2) im zweiten Zustand auf der Oberfläche (Ob) erzielt, gleich der beim ersten Zustand ermittelten maximalen Beleuchtungsstärke ist.

8. Beleuchtungsvorrichtung (100) nach einem der vorhergehenden Ansprüche,
**dadurch gekennzeichnet, dass**
die Zusatz-Beleuchtungseinheit (2) wahlweise in einem ersten Zustand oder in einem zweiten Zustand betreibbar ist und
die Beleuchtungsvorrichtung (100) ein signalverarbeitendes Steuergerät (10) umfasst,
wobei der Lichtfeld-Durchmesser (d₁₀), die die Zusatz-Beleuchtungseinheit (2) im ersten Zustand auf der beleuchteten Oberfläche (Ob) erzielt, sich wenigstens bei einem Abstand (Ent) im Abstandsbereich vom Lichtfeld-Durchmesser (d₁₀) im zweiten Zustand unterscheidet,
wobei das Steuergerät (10) dazu ausgestaltet ist, automatisch
- den Lichtfeld-Durchmesser (d₁₀), welche die Beleuchtungsvorrichtung (100) mit der Zusatz-Beleuchtungseinheit (2) im ersten Zustand auf der Oberfläche (Ob) erzielt, zu ermitteln,
- eine Vorgabe zu erfassen, dass die Zusatz-Beleuchtungseinheit (2) vom ersten in den zweiten Zustand umgeschaltet werden soll,
- zu bewirken, dass die die Zusatz-Beleuchtungseinheit (2) vom ersten in den zweiten Zustand umgeschaltet wird, und
- die Haupt-Beleuchtungseinheit (1) anzusteuern, und
wobei das Ziel bei der Ansteuerung der Haupt-Beleuchtungseinheit (1) ist, dass der Lichtfeld-Durchmesser (d₁₀), welche die Beleuchtungsvorrichtung (100) mit der Zusatz-Beleuchtungseinheit (2) im zweiten Zustand auf der Oberfläche (Ob) erzielt, gleich dem beim ersten Zustand ermittelten Lichtfeld-Durchmesser (d₁₀) ist.

9. Beleuchtungsvorrichtung (100) nach Anspruch 7 oder Anspruch 8,
**dadurch gekennzeichnet, dass**
die Zusatz-Beleuchtungseinheit (2) einschaltbar und ausschaltbar ist,
wobei die ausgeschaltete Zusatz-Beleuchtungseinheit (2) in dem einen Zustand und die eingeschaltete Zusatz-Beleuchtungseinheit (2) in dem anderen Zustand ist.

10. Beleuchtungsvorrichtung (100) nach einem der vorhergehenden Ansprüche,
**dadurch gekennzeichnet, dass**
die Beleuchtungsvorrichtung (100) ein signalverarbeitendes Steuergerät (10) umfasst und
die Beleuchtungsvorrichtung (100) dazu ausgestaltet ist, auf der beleuchteten Oberfläche (Ob) einen Kontrast zu erzielen,
wobei als erzeugter Kontrast der Quotient aus
- der maximalen Beleuchtungsstärke, den die Beleuchtungsvorrichtung (100) auf der Oberfläche (Ob) erzielt, und
- der mittleren Beleuchtungsstärke, den die Beleuchtungsvorrichtung (100) auf der Oberfläche (Ob) in einem Kreis um einen Punkt mit maximaler Beleuchtungsstärke erzielt,
verwendet wird,
wobei der Durchmesser dieses Kreises größer ist als der Lichtfeld-Durchmesser d₁₀ der Beleuchtungsrichtung (100),
bevorzugt um einen Faktor größer, der zwischen 1,5 und 3 liegt, und
wobei das Steuergerät (10) dazu ausgestaltet ist, automatisch
- eine Kontrast-Vorgabe betreffend einen Kontrast, den die Beleuchtungsvorrichtung (100) auf der Oberfläche (Ob) erzielen soll, zu erfassen, und
- die Zusatz-Beleuchtungseinheit (2) mit dem Ziel anzusteuern, dass der tatsächliche Kontrast, den die Beleuchtungsvorrichtung (100) erzielt, gleich der erfassten Kontrast-Vorgabe ist.

11. Beleuchtungsvorrichtung (100) nach Anspruch 10,
**dadurch gekennzeichnet, dass**
das Steuergerät (10) dazu ausgestaltet ist, nach dem Erfassen der Vorgabe betreffend den Kontrast
die Zusatz-Beleuchtungseinheit (2) mit dem zusätzlichen Ziel anzusteuern, dass der Lichtfeld-Durchmesser (d₁₀) und / oder die maximale Beleuchtungsstärke, den die Beleuchtungsvorrichtung (100) auf der Oberfläche (Ob) erzielt, unverändert bleiben.

12. Beleuchtungsvorrichtung (100) nach einem der vorhergehenden Ansprüche,
**dadurch gekennzeichnet, dass**
die Haupt-Beleuchtungseinheit (1) und die Zusatz-Beleuchtungseinheit (2) dazu ausgestaltet sind, Licht aufweisend jeweils ein Lichtspektrum und eine mit dem Lichtspektrum korrelierte Farbtemperatur zu emittieren, und
die Beleuchtungsvorrichtung (100) ein signalverarbeitendes Steuergerät (10) umfasst
wobei das Steuergerät (10) dazu ausgestaltet ist,
- eine Vorgabe für das Lichtspektrum der Haupt-Beleuchtungseinheit (1) und / oder der Beleuchtungsvorrichtung (100) zu erfassen,
- das Lichtspektrum der Haupt-Beleuchtungseinheit (1) entsprechend der Vorgabe zu verändern und
- das Lichtspektrum der Zusatz-Beleuchtungseinheit (2) so zu verändern, dass sich nach der Veränderung die korrelierten Farbtemperaturen der beiden Beleuchtungseinheiten (1, 2) um höchstens 500 Kelvin, bevorzugt um höchstens 200 Kelvin, besonders bevorzugt um höchstens 50 Kelvin, voneinander unterscheiden.

13. Beleuchtungsvorrichtung (100) nach einem der vorhergehenden Ansprüche,
**dadurch gekennzeichnet, dass**
jede Lichtquelle (2.1, 2.2) der Zusatz-Beleuchtungseinheit (2)
- jeweils eine optische Mittelachse (MA_{2.1}, MA_{2.2}) aufweist, welche in einem Zusatz-Schnittpunkt (S₁, S₂) die Oberfläche (Ob) schneidet, und
- dazu ausgestaltet ist, die Oberfläche (Ob) dergestalt zu beleuchten, dass die Beleuchtungsstärke, welche die Lichtquelle (2.1, 2.2) auf der Oberfläche (Ob) erzielt, im Zusatz-Schnittpunkt (S₁, S₂) den maximalen Wert (Ev_{max,add}) annimmt und außerhalb des Zusatz-Schnittpunkts (S₁, S₂) kleiner ist,
wobei die oder mindestens zwei Zusatz-Schnittpunkte (S₁, S₂) voneinander beabstandet sind.

14. Beleuchtungsvorrichtung (100) nach Anspruch 13,
**dadurch gekennzeichnet, dass**
die Haupt-Beleuchtungseinheit (1) eine optische Mittelachse (MA) aufweist, welche in einem Haupt-Schnittpunkt (S) die Oberfläche (Ob) schneidet, und die Zusatz-Schnittpunkte (S₁, S₂) einen Bereich auf der Oberfläche (Ob) umgrenzen,
wobei der Haupt-Schnittpunkt (S) von jedem Zusatz-Schnittpunkt (S₁, S₂) beabstandet ist und im Inneren des umgrenzten Bereichs liegt und wobei die Beleuchtungsstärke, die die Haupt-Beleuchtungseinheit (1) auf der beleuchteten Oberfläche (Ob) erzeugt, an jedem Punkt im umgrenzten Bereich mindestens 10 %, bevorzugt mindestens 50%, der maximalen Beleuchtungsstärke (Ev_{max,main}) der Haupt-Beleuchtungseinheit (1) beträgt.

15. Beleuchtungsvorrichtung (100) nach Anspruch 14,
**dadurch gekennzeichnet, dass**
die Beleuchtungsvorrichtung (100) so ausgestaltet ist, dass die Haupt-Beleuchtungseinheit (1) die maximale Beleuchtungsstärke (Ev_{max,main}) auf der Oberfläche (Ob) im Haupt-Schnittpunkt (S) erzeugt und die jeweilige maximale Beleuchtungsstärke (Ev_{max,add}), welche die Zusatz-Beleuchtungseinheit (2) auf der Oberfläche (Ob) in einem Zusatz-Schnittpunkt (S₁, S₂) erzeugt, zwischen 1 % und 15 %, bevorzugt zwischen 2 % und 5 %, der maximalen Beleuchtungsstärke (Ev_{max,main}) der Haupt-Beleuchtungseinheit (1) beträgt.

16. Beleuchtungsverfahren zur Beleuchtung einer Oberfläche (Ob)
unter Verwendung einer Beleuchtungsvorrichtung (100) nach einem der Ansprüche 1 bis 15,
wobei das Beleuchtungsverfahren die automatisch durchgeführten Schritte umfasst, dass
- eine Beleuchtungsstärken-Vorgabe erfasst wird, welche die maximale Beleuchtungsstärke festlegt, welche die Beleuchtungsvorrichtung (100) erzielen soll,
- die maximale Beleuchtungsstärke (Ev_{max,main}), welche die Haupt-Beleuchtungseinheit (1) auf der Oberfläche (Ob) erzeugt, ermittelt wird,
- die maximale Beleuchtungsstärke (Ev_{max,add}), welche die Zusatz-Beleuchtungseinheit (2) auf der Oberfläche (Ob) erzeugt, ermittelt wird,
- eine maximal erzielte Beleuchtungsstärke der Haupt-Beleuchtungseinheit (1), der Zusatz-Beleuchtungseinheit (2) und / oder der Beleuchtungsvorrichtung (100) verändert wird und
- die Haupt-Beleuchtungseinheit (1) und / oder die Zusatz-Beleuchtungseinheit (2) abhängig von der erfassten Beleuchtungsstärken-Vorgabe dergestalt angesteuert wird, dass der Beleuchtungsstärken-Quotient unverändert bleibt,
wobei der Beleuchtungsstärken-Quotient der Quotient zwischen
- der maximalen Beleuchtungsstärke (Ev_{max,add}), die die Zusatz-Beleuchtungseinheit (2) auf der Oberfläche (Ob) erzielt, und
- der maximalen Beleuchtungsstärke (Ev_{max,main}), die die Haupt-Beleuchtungseinheit (1) auf der Oberfläche (Ob) erzielt,
ist.

17. Beleuchtungsverfahren zur Beleuchtung einer Oberfläche (Ob)
unter Verwendung einer Beleuchtungsvorrichtung (100) nach einem der Ansprüche 1 bis 15,
wobei das Beleuchtungsverfahren die automatisch durchgeführten Schritte umfasst, dass
- die Zusatz-Beleuchtungseinheit (2) in einem ersten Zustand betrieben wird, in dem sie auf der Oberfläche (Ob) eine erste maximale Beleuchtungsstärke und / oder einen ersten Lichtfeld-Durchmesser erzielt,
- die maximale Beleuchtungsstärke und / oder der erste Lichtfeld-Durchmesser, welche die Beleuchtungsvorrichtung (100) mit der Zusatz-Beleuchtungseinheit (2) im ersten Zustand auf der Oberfläche (Ob) erzielt, ermittelt werden,
- die Zusatz-Beleuchtungseinheit (2) vom ersten in einen zweiten Zustand umgeschaltet wird,
- die Zusatz-Beleuchtungseinheit (2) im zweiten Zustand auf der Oberfläche (Ob) eine zweite maximale Beleuchtungsstärke und / oder einen zweiten Lichtfeld-Durchmesser erzielt, die von der ersten maximalen Beleuchtungsstärke bzw. vom ersten Lichtfeld-Durchmesser verschieden sind, und
- die Haupt-Beleuchtungseinheit (1) angesteuert wird,
wobei das Ziel bei der Ansteuerung ist, dass
- die maximale Beleuchtungsstärke, welche die Beleuchtungsvorrichtung (100) mit der Zusatz-Beleuchtungseinheit (2) im zweiten Zustand auf der Oberfläche (Ob) erzielt, gleich der zuvor ermittelten maximalen Beleuchtungsstärke ist, und / oder
- der Lichtfeld-Durchmesser (d₁₀), welche die Beleuchtungsvorrichtung (100) mit der Zusatz-Beleuchtungseinheit (2) im zweiten Zustand auf der Oberfläche (Ob) erzielt, gleich dem zuvor ermittelten Lichtfeld-Durchmesser (d₁₀) ist.

18. Beleuchtungsverfahren zur Beleuchtung einer Oberfläche (Ob)
unter Verwendung einer Beleuchtungsvorrichtung (100) nach einem der Ansprüche 1 bis 15,
wobei die Beleuchtungsvorrichtung (100) auf der beleuchteten Oberfläche (Ob) einen Kontrast erzielt,
wobei als erzeugter Kontrast der Quotient aus
- der maximalen Beleuchtungsstärke, den die Beleuchtungsvorrichtung (100) auf der Oberfläche (Ob) erzielt, und
- der mittleren Beleuchtungsstärke, den die Beleuchtungsvorrichtung (100) auf der Oberfläche (Ob) in einem Kreis um einen Punkt mit maximaler Beleuchtungsstärke erzielt,
verwendet wird,
wobei der Durchmesser dieses Kreises größer ist als der Lichtfeld-Durchmesser d₁₀ der Beleuchtungsrichtung (100),
bevorzugt um einen Faktor größer, der zwischen 1,5 und 3 liegt, und
wobei das Beleuchtungsverfahren die automatisch durchgeführten Schritte umfasst, dass
- eine Kontrast-Vorgabe betreffend einen Kontrast, den die Beleuchtungsvorrichtung (100) auf der Oberfläche (Ob) erzielen soll, erfasst wird und
- die Zusatz-Beleuchtungseinheit (2) mit dem Ziel angesteuert wird, dass der tatsächliche Kontrast, den die Beleuchtungsvorrichtung (100) erzielt, gleich der erfassten Kontrast-Vorgabe ist,
wobei bevorzugt die Zusatz-Beleuchtungseinheit (2) mit dem zusätzlichen Ziel angesteuert wird, dass der Lichtfeld-Durchmesser (d₁₀) und / oder die maximale Beleuchtungsstärke, den die Beleuchtungsvorrichtung (100) auf der Oberfläche (Ob) erzielt, unverändert bleiben.
